# EUROPEAN PATENT APPLICATION

(11) **EP 4 427 971 A1**
(43) Date of publication of application: **11.09.2024**
(21) Application number: 22906023.1
(22) Date of filing: 10.10.2022
(51) Int. Cl.: B60L 53/62, B60L 53/60

(54) **CHARGING SYSTEM, CHARGING STATION, POWER SUPPLY METHOD, AND COMPUTER READABLE STORAGE MEDIUM**

(30) Priority: 17.12.2021 CN 202111553216
(71) Applicant: Huawei Digital Power Technologies Co., Ltd., Shenzhen, Guangdong 518043 (CN)
(72) Inventor: TANG, Lin, Shenzhen, Guangdong 518043 (CN); LIN, Quanxi, Shenzhen, Guangdong 518043 (CN); YE, Wanxiang, Shenzhen, Guangdong 518043 (CN)
(74) Representative: Isarpatent
(86) International application number: PCT/CN2022/124395
(87) International publication number: WO 2023/109271

(57) **Abstract**

This application provides a charging system, a charging station, a power supply method, and a computer-readable storage medium, to improve charging efficiency and avoid a waste of resources. The charging system includes one or more direct current-to-direct current conversion modules, a first power sharing bus, a second power sharing bus, at least one first output end, and at least one second output end. The direct current-to-direct current conversion module includes at least one first energy supply unit and at least one second energy supply unit. The first energy supply unit is coupled to the first power sharing bus. The second energy supply unit is coupled to the first power sharing bus and the second power sharing bus. The first output end is coupled to the first power sharing bus. The second output end is coupled to the second power sharing bus. A maximum output power of the first output end is different from a maximum output power of the second output end.

## Description

### CROSS-REFERENCE TO RELATED APPLICATIONS

This application claims priority to Chinese Patent Application No. 202111553216.7, filed with the China National Intellectual Property Administration on December 17, 2021 and entitled "CHARGING SYSTEM, CHARGING STATION, POWER SUPPLY METHOD, AND COMPUTER-READABLE STORAGE MEDIUM", which is incorporated herein by reference in its entirety.

### TECHNICAL FIELD

This application relates to the field of charging technologies, and in particular, to a charging system, a charging station, a power supply method, and a computer-readable storage medium.

### BACKGROUND

With popularization of new energy vehicles (or new energy electric vehicles), charging requirements of new the energy vehicles are increasing. A new energy vehicle is connected to a charging pile for charging. After a period of time, the traction battery is fully charged, and the charging pile stops supplying power to the new energy vehicle. If the traction battery of the new energy vehicle is still connected to the charging pile after being fully charged, that is, the charging pile is occupied, a waste of charging pile resources is caused. To meet charging requirements of other new energy vehicles, additional charging piles need to be deployed in a charging station, which causes higher operating costs of the charging station. The charging pile is still occupied after the traction battery of the vehicle is fully charged, and cannot charge another new energy vehicle having a charging requirement. Consequently, usage of the charging pile is low, and charging resources of the charging pile are wasted, reducing charging efficiency of the charging pile and therefore charging efficiency of the charging station.

### SUMMARY

This application provides a charging system, a charging station, a power supply method, and a computer-readable storage medium, to improve charging efficiency and avoid a waste of resources.

According to a first aspect, an embodiment of this application provides a charging system, including one or more direct current-to-direct current conversion modules, a first power sharing bus, a second power sharing bus, at least one first output end, and at least one second output end. The direct current-to-direct current conversion module includes at least one first energy supply unit and at least one second energy supply unit. The first energy supply unit is coupled to the first power sharing bus, and is configured to output direct current electrical energy to the first power sharing bus. The second energy supply unit is coupled to the first power sharing bus and the second power sharing bus, and is configured to output direct current electrical energy to the first power sharing bus or the second power sharing bus. The first output end is coupled to the first power sharing bus, and is configured to transmit direct current electrical energy on the first power sharing bus to a coupled charging apparatus. The second output end is coupled to the second power sharing bus, and is configured to transmit direct current electrical energy on the second power sharing bus to a coupled charging apparatus. A maximum output power of the first output end is different from a maximum output power of the second output end.

In the charging system provided in this embodiment of this application, the first energy supply unit of each direct current-to-direct current conversion module may output electrical energy to the first power sharing bus, and the second energy supply unit may flexibly output electrical energy to the first power sharing bus or the second power sharing bus, so that the direct current-to-direct current conversion module flexibly provides electrical energy to the first power sharing bus or the second power sharing bus. Any first output end of the charging system obtains electrical energy from the first power sharing bus, and any second output end may obtain electrical energy from the second power sharing bus. The electrical energy on the first power sharing bus may come from any direct current-to-direct current conversion module, and the electrical energy on the second power sharing bus may also come from any direct current-to-direct current conversion module. In such a design, one first output end being occupied for a long time does not affect the direct current-to-direct current conversion module to output electrical energy to the first power sharing bus or the second power sharing bus. The electrical energy output by the direct current-to-direct current conversion module can be flexibly obtained by other output ends through the first power sharing bus or the second power sharing bus, which can improve charging efficiency, fully utilize an output electrical energy capability of each direct current-to-direct current conversion module, and avoid a waste of resources.

In a possible design, the maximum output power of the first output end is less than the maximum output power of the second output end. In this embodiment of this application, the first output end and the second output end may be respectively used to charge objects to be charged with different charging power levels. In this way, an object to be charged that requires low-power charging can be charged through the first output end. An object to be charged that requires high-power charging can be charged through the second output end.

In a possible design, a maximum output power of the second energy supply unit is the same as a maximum output power of the direct current-to-direct current conversion module. In this embodiment of this application, an output power range of the second energy supply unit in the direct current-to-direct current conversion module is the same as an output power range of the direct current-to-direct current conversion module to which the second energy supply unit belongs, and the second energy supply unit can flexibly output a remaining power of the direct current-to-direct current conversion module to the first power sharing bus or the second power sharing bus, so that the first output end or the second output end obtains electrical energy to charge an object to be charged. It can be learned that such a design can fully utilize an output power capability of each direct current-to-direct current conversion module.

In a possible design, a maximum output power of the first energy supply unit is less than a maximum output power of a direct current-to-direct current conversion module to which the first energy supply unit belongs. Such a design enables the direct current-to-direct current conversion module to be compatible with an energy supply unit with a low output power.

In a possible design, the maximum output power of the second energy supply unit is greater than the maximum output power of the first energy supply unit. It can be learned that in the charging system provided in this embodiment of this application, the first energy supply unit and the second energy supply unit included in the direct current-to-direct current conversion module may be energy supply units with different output power capabilities, thereby improving compatibility of the charging system.

In a possible design, a quantity of the at least one first output end is the same as a quantity of all first energy supply units in the one or more direct current-to-direct current conversion modules; and a quantity of the at least one second output end is the same as a quantity of all second energy supply units in the one or more direct current-to-direct current conversion modules. In such a design, additional first energy supply units, first output ends, second energy supply units, and second output ends are deployed in the charging system, so that more objects to be charged can be served. Compared with the existing deployment of additional charging piles, the deployment of the additional first energy supply units, first output ends, second energy supply units, and second output ends has lower costs.

In a possible design, all of the first output ends have the same maximum output power, and/or all of the second output ends have the same maximum output power. Such a design facilitates allocation of an output end for charging to an object to be charged.

In a possible design, the direct current-to-direct current conversion module further includes at least one first switching unit. The at least one first switching unit is in a one-to-one correspondence with the at least one second energy supply unit included in the direct current-to-direct current conversion module. The second energy supply unit is coupled to a corresponding first switching unit. The first switching unit is coupled to the first power sharing bus and the second power sharing bus. The first switching unit is configured to transmit, to the first power sharing bus or the second power sharing bus, direct current electrical energy output by the second energy supply unit corresponding to the first switching unit. In this embodiment of this application, the electrical energy output by the second energy supply unit is transmitted to the first power sharing bus or the second power sharing bus by controlling the first switching unit.

In a possible design, the charging system may further include an alternating current-to-direct current conversion module. The alternating current-to-direct current conversion module is configured to convert alternating current electrical energy provided by an alternating current power source into direct current electrical energy, and then provide the direct current electrical energy for the direct current-to-direct current conversion module. In this embodiment of this application, the charging system may receive alternating current electrical energy, for example, a grid.

In a possible design, a voltage output by the alternating current-to-direct current conversion module to the direct current-to-direct current conversion module is less than or equal to 1,000 volts. In this embodiment of this application, the output voltage of the alternating current-to-direct current conversion module may be less than or equal to 1,000 volts, so that the charging system can be applied to a low-power charging scenario.

In a possible design, a maximum value of an output voltage of the first energy supply unit is less than or equal to 1,000 volts; and/or a maximum value of an output voltage of the second energy supply unit is less than or equal to 1,000 volts.

In a possible design, a minimum value of the output voltage of the first energy supply unit is greater than or equal to 150 volts; and/or a minimum value of the output voltage of the second energy supply unit is greater than or equal to 150 volts.

In a possible design, a maximum power of the direct current electrical energy that can be provided by the first output end to the coupled charging apparatus is 20 kilowatts.

In a possible design, the charging system further includes a control module. The direct current-to-direct current conversion module further includes a control unit. The control unit in the direct current-to-direct current conversion module is coupled to the first energy supply unit and the second energy supply unit. The control module is communicatively connected to the control unit, and is configured to control the control unit to adjust the direct current electrical energy output by the direct current-to-direct current conversion module to the first power sharing bus, and/or adjust the direct current electrical energy output by the direct current-to-direct current conversion module to the second power sharing bus.

According to a second aspect, an embodiment of this application provides a charging station, which may include the charging system according to any one of the first aspect and the designs thereof and a plurality of charging apparatuses. In the plurality of charging apparatuses, any charging apparatus is coupled to a first output end or a second output end of one charging system. The any charging apparatus is coupled to an object to be charged, and is configured to transmit, to the object to be charged, direct current electrical energy provided by the charging system coupled to the any charging apparatus.

According to a third aspect, an embodiment of this application provides a power supply method, which may be applied to the charging system according to any one of the first aspect and the designs thereof. The power supply method may be performed or implemented by a control module of the charging system. The control module may obtain a first power parameter, where the first power parameter is an expected input power when an object to be charged is charged; and allocate a target output end from at least one first output end and at least one second output end of the charging system to the object to be charged, where a maximum output power of the target output end is greater than or equal to the first power parameter. In this embodiment of this application, a maximum output power of the first output end of the charging system is different from a maximum output power of the second output end. The control module may allocate a matching output end to the object to be charged based on the expected input power of the object to be charged.

In a possible design, if the first power parameter is less than or equal to a specified power parameter threshold, and there is an idle first output end in the at least one first output end, the control module allocates the idle first output end to the object to be charged, where the power parameter threshold represents a maximum output power of a first energy supply unit of any direct current-to-direct current conversion module in the charging system; or if the first power parameter is greater than the power parameter threshold, and there is an idle second output end in the at least one second output end, the control module allocates the idle second output end to the object to be charged; or if the first power parameter is less than or equal to the power parameter threshold, there is no idle first output end in the at least one first output end, and there is an idle second output end in the at least one second output end, the control module allocates the idle second output end to the object to be charged.

In a possible design, after allocating the target output end to the object to be charged, the control module may obtain a second power parameter of the object to be charged, where the second power parameter is the same as an actual charging power of the object to be charged; and control the direct current-to-direct current conversion module in the charging system based on the second power parameter.

In a possible design, the target output end allocated by the control module to the object to be charged is the idle first output end; when controlling the direct current-to-direct current conversion module in the charging system based on the second power parameter, the control module may control a first direct current-to-direct current conversion module in the charging system to output first direct current electrical energy to a first power sharing bus, where a power of the first direct current electrical energy is the same as the second power parameter, and a remaining power of the first direct current-to-direct current conversion module is greater than or equal to the second power parameter; or control a plurality of second direct current-to-direct current conversion modules in the charging system to separately output direct current electrical energy to the first power sharing bus, where a total power of the direct current electrical energy output by the plurality of second direct current-to-direct current conversion modules is the same as the second power parameter, and the plurality of second direct current-to-direct current conversion modules include a target second direct current-to-direct current conversion module whose remaining power is less than the second power parameter.

In a possible design, when controlling the first direct current-to-direct current conversion module in the charging system to output the first direct current electrical energy to the first power sharing bus, the control module may control an idle first energy supply unit in the first direct current-to-direct current conversion module to output the first direct current electrical energy to the first power sharing bus; and when controlling the plurality of second direct current-to-direct current conversion modules in the charging system to separately output the direct current electrical energy to the first power sharing bus, the control module may control an idle first energy supply unit or an idle second energy supply unit in the target second direct current-to-direct current conversion module to output second direct current electrical energy to the first power sharing bus, where a power of the second direct current electrical energy is the same as a remaining power of the target direct current-to-direct current conversion module; and control a second direct current-to-direct current conversion module other than the target second direct current-to-direct current conversion module in the plurality of second direct current-to-direct current conversion modules to output third direct current electrical energy, where a sum of powers of the third direct current electrical energy and the second direct current electrical energy is the same as the second power parameter.

In a possible design, the target output end allocated to the object to be charged is the idle second output end; when controlling the direct current-to-direct current conversion module in the charging system based on the second power parameter, the control module may control a third direct current-to-direct current conversion module to output fourth direct current electrical energy to a second power sharing bus of the charging system, where a power of the fourth direct current electrical energy is the same as the second power parameter, a remaining power of the third direct current-to-direct current conversion module is greater than or equal to the second power parameter, and the third direct current-to-direct current conversion module includes an idle second energy supply unit; and the control module may control a plurality of fourth direct current-to-direct current conversion modules to separately output direct current electrical energy to the second power sharing bus, where a total power of direct current electrical energy output by the plurality of fourth direct current-to-direct current conversion modules is the same as the second power parameter, there is a target fourth direct current-to-direct current conversion module whose remaining power is less than the second power parameter in the plurality of fourth direct current-to-direct current conversion modules, and each fourth direct current-to-direct current conversion module includes an idle second energy supply unit.

According to a fourth aspect, this application provides a computer-readable storage medium. The computer-readable storage medium stores computer instructions that, when executed, cause the method according to any one of the designs of the third aspect to be performed.

According to a fifth aspect, this application provides a computer program product including computer instructions that, when executed, cause the method according to any one of the designs of the third aspect to be performed.

For technical effects that can be achieved by any possible design of any one of the second aspect to the fifth aspect, refer to the technical effects that can be achieved by any possible design of the first aspect. Details are not repeated herein.

### BRIEF DESCRIPTION OF DRAWINGS

FIG. 1 is a schematic diagram of a scenario in which a charging pile is used to charge a vehicle;
FIG. 2A and FIG. 2B are a schematic diagram of a structure of a charging system according to an embodiment of this application;
FIG. 3A and FIG. 3B are a schematic diagram of a structure of another charging system according to an embodiment of this application;
FIG. 4A and FIG. 4B are a schematic diagram of a connection relationship between a control module, a direct current-to-direct current conversion module, and a charging apparatus of a charging system according to an embodiment of this application;
FIG. 5 is a schematic diagram of a structure of an alternating current-to-direct current conversion module in a charging system according to an embodiment of this application;
FIG. 6 is a schematic diagram of interaction between a control module of a charging system and an object to be charged or an electronic device according to an embodiment of this application;
FIG. 7A and FIG. 7B are a schematic diagram of a scenario in which a charging system is used to charge an object to be charged according to an embodiment of this application;
FIG. 8 is a schematic diagram of a scenario in which a charging system is used to charge an object to be charged according to an embodiment of this application;
FIG. 9 is a schematic diagram of a scenario in which a charging system is used to charge an object to be charged according to an embodiment of this application; and
FIG. 10 is a schematic diagram of a structure of a charging station according to an embodiment of this application.

### DESCRIPTION OF EMBODIMENTS

The terms used in the following embodiments are merely intended to describe particular embodiments, but are not intended to limit this application. As used in the specification and appended claims of this application, singular expressions "a", "an", "said", "the foregoing", "the", and "this" are also intended to include the expressions such as "one or more", unless otherwise clearly indicated in its context.

Reference to "an embodiment", "some embodiments", or the like described in this specification means that one or more embodiments of this application include specific features, structures, or characteristics described with reference to the embodiments. Therefore, the phrases, such as "in an embodiment", "in some embodiments", "in some other embodiments", and "in other embodiments", that appear in different places in this specification do not necessarily mean reference to the same embodiment; instead, they mean "one or more but not all of the embodiments", unless otherwise specifically emphasized. The terms "include", "comprise", "have", and their variants all mean "include but is not limited to", unless otherwise specifically emphasized.

A first object being "one-to-one corresponding" to a second object or a first object and a second object being in a "one-to-one correspondence" described in this specification means that one first object corresponds to only one second object, and that one second object corresponds to only one first object.

In addition, it should be understood that in the description of this application, the terms such as "first" and "second" are merely used for distinguishing and description, but should not be understood as indicating or implying relative importance, or as indicating or implying a sequence.

To make objectives, technical solutions, and advantages of this application clearer, this application is described in further detail below with reference to the accompanying drawings. To facilitate understanding of advantages of a charging system provided in an embodiment of this application, an application scenario of the charging system is first described below.

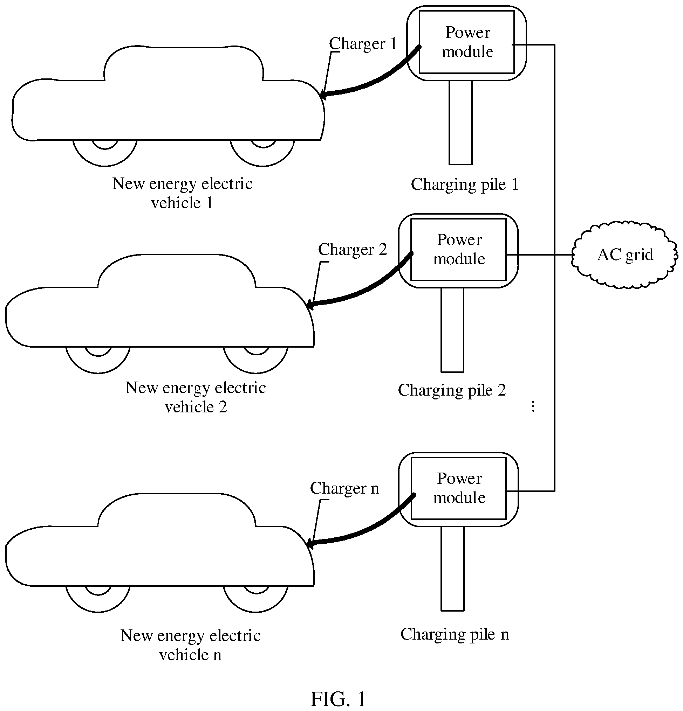

Currently, as more and more users use new energy electric vehicles, requirements for charging piles gradually increase. Referring to FIG. 1, generally, a new energy electric vehicle may be charged through a charging pile provided by a charging station. Generally, a plurality of charging piles are installed in the charging station, so that a plurality of new energy electric vehicles can be charged at the same time. As shown in FIG. 1, the charging pile is integrated with a power module and provided with a charger. The power module converts an alternating current into a direct current that is then output through the charger. A new energy electric vehicle may be connected to a charger, and obtain electrical energy through the charger. Charging can be completed after the new energy electric vehicle is charged through the charging pile for a period of time. Therefore, the new energy electric vehicle needs to stay at the charging pile for a period of time, that is, occupy the charging pile for a period of time. A duration for which the vehicle occupies the charging pile may be set by a user of the vehicle. The user expects, according to their own requirements, a duration for which the vehicle is charged in a parking space corresponding to the charging pile. For ease of description, the duration is denoted as an expected charging duration of the vehicle in the embodiments of this application. During the process of charging the vehicle, the user may not wait in the vehicle.

For example, an expected charging duration of a vehicle A is 2 hours. After the vehicle A occupies the charging pile for 2 hours, the user drives the vehicle A away from the charging pile, releasing the charging pile. However, a power output by the charging pile may enable the vehicle A to complete charging within 1 hour, while the vehicle A occupies the charging pile for 2 hours. As a result, the charging pile cannot be used to charge another vehicle one hour after completing charging the vehicle A, causing a waste of charging resources.

For another example, an expected charging duration requirement of a vehicle B is 4 hours. A charging duration requirement of the vehicle B is 4 hours. After the vehicle B occupies the charging pile for 4 hours, the user drives the vehicle B away from the charging pile, releasing the charging pile. However, a power output by the charging pile may enable the vehicle B to complete charging within 2 hours, while the vehicle B occupies the charging pile for 4 hours. As a result, the charging pile cannot be used to charge another vehicle two hours after completing charging the vehicle B, causing a waste of charging resources.

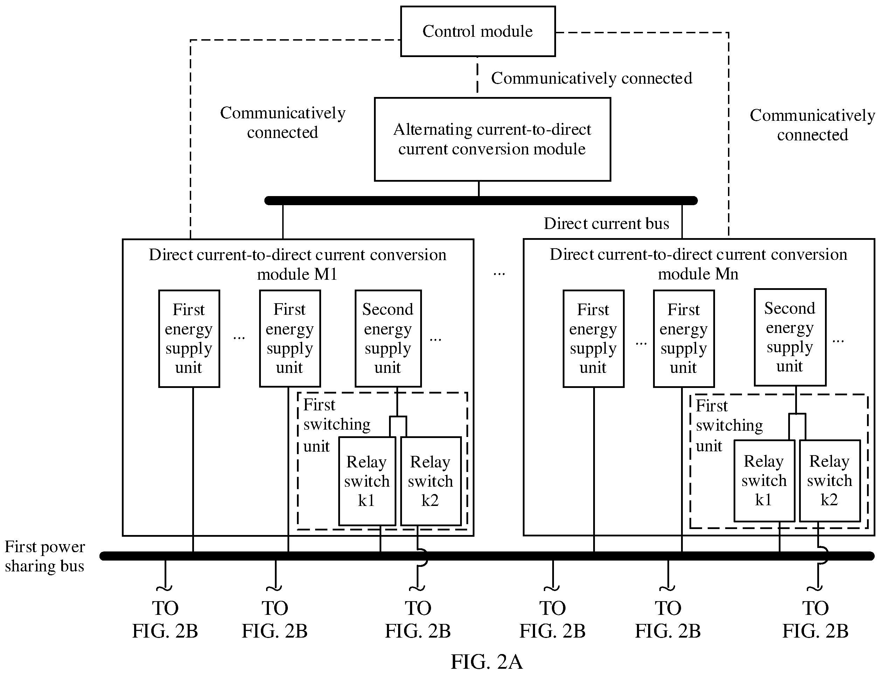

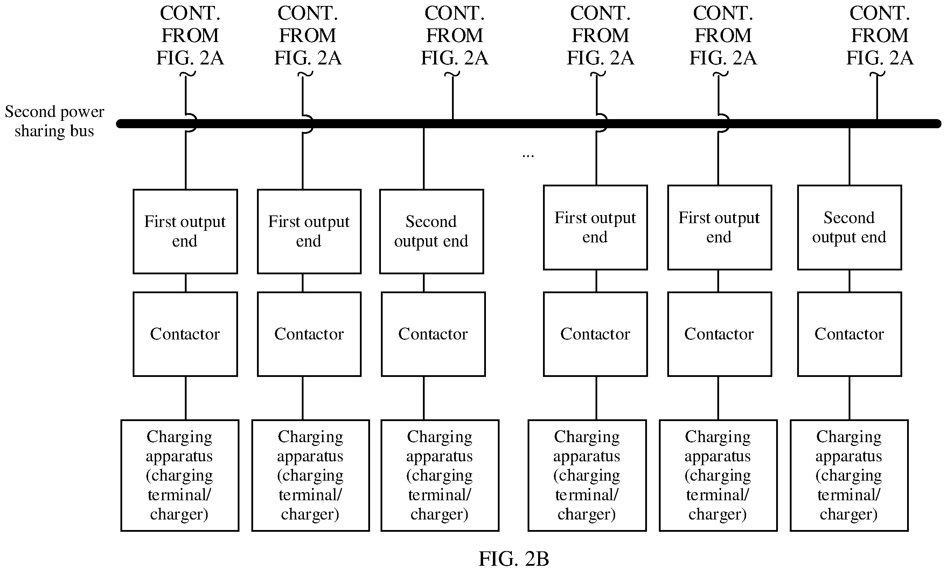

Output power capabilities of all charging piles in an existing charging station are the same. It is assumed that charging piles with different output power capabilities are provided in the charging station, a charging pile with a low power output capability is used to charge a vehicle with a relatively long expected charging duration, and a charging pile with a high power output capability is used to charge a vehicle with a relatively short expected charging duration. Such a design may reduce a waste of charging pile resources. However, in an actual application scenario, additional charging piles of different power levels need to be deployed in the charging station, causing higher deployment costs. In addition, there is a one-to-one correspondence between charging piles and vehicles in the charging station, and charging resource scheduling lacks flexibility. To improve charging efficiency and charging resource scheduling flexibility, this application provides a charging system, which may be applied to a charging station. Referring to FIG. 2A and FIG. 2B, the charging system provided in this application may include one or more direct current-to-direct current conversion modules, a first power sharing bus, a second power sharing bus, at least one first output end, and at least one second output end.

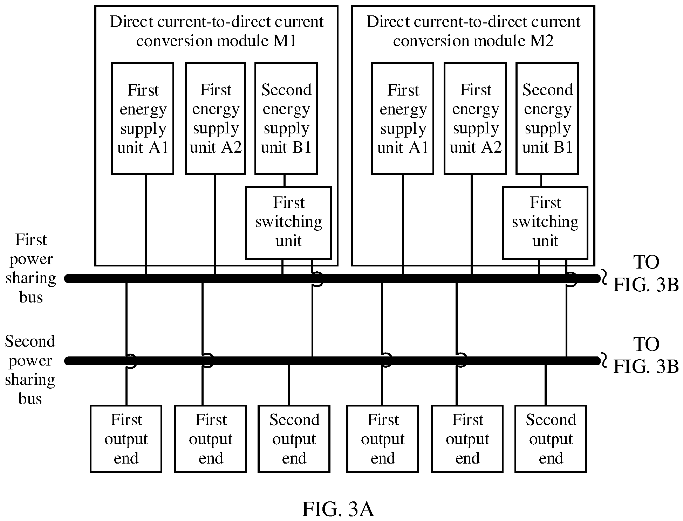

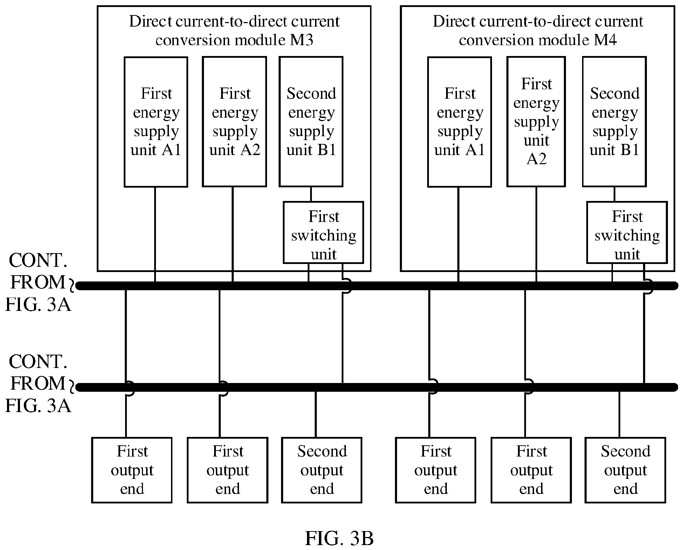

For example, the charging system may include n direct current-to-direct current conversion modules, where n may be a positive integer. The n direct current-to-direct current conversion modules in the charging system may be respectively denoted as a direct current-to-direct current conversion module M1 to a direct current-to-direct current conversion module Mn. As shown in FIG. 3A and FIG. 3B, n may be equal to 4, that is, the charging system may include four direct current-to-direct current conversion modules, which may be respectively denoted as a direct current-to-direct current conversion module M1, a direct current-to-direct current conversion module M2, a direct current-to-direct current conversion module M3, and a direct current-to-direct current conversion module M4.

FIG. 2A and FIG. 2B or FIG. 3A and FIG. 3B show a case in which the charging system includes a plurality of direct current-to-direct current conversion modules, which does not mean that the charging system needs to include a plurality of direct current-to-direct current conversion modules. In some examples, the charging system may include only one direct current-to-direct current conversion module. A quantity of direct current-to-direct current conversion modules shown in the accompanying drawings provided in the embodiments of this application is merely used to describe a working process of the charging system by using an example, and does not constitute a specific limitation on a quantity of direct current-to-direct current conversion modules in the charging system.

Any two direct current-to-direct current conversion modules in the charging system may have a same or similar structure, and may be coupled to the first power sharing bus in a same or similar manner and to the second power sharing bus in a same or similar manner. A structure or a function of a direct current-to-direct current conversion module is described below.

Any direct current-to-direct current conversion module may be coupled to the first power sharing bus and the second power sharing bus. Any direct current-to-direct current conversion module may include at least one first energy supply unit and at least one second energy supply unit. Each first energy supply unit may be coupled to the first power sharing bus. Each second energy supply unit may be coupled to the first power sharing bus and the second power sharing bus.

As shown in FIG. 3A and FIG. 3B, taking the direct current-to-direct current conversion module M1 as an example, the direct current-to-direct current conversion module M1 may include two first energy supply units, which are respectively denoted as a first energy supply unit A1 and a first energy supply unit A2. The direct current-to-direct current conversion module M1 further includes a second energy supply unit, which is denoted as a second energy supply unit B 1. Both the first energy supply unit A1 and the first energy supply unit A2 are coupled to the first power sharing bus. The second energy supply unit B1 is coupled to the first power sharing bus and the second power sharing bus. It should be understood that show a quantity of first energy supply units and a quantity of second energy supply units in each direct current-to-direct current conversion module shown in the accompanying drawings in the embodiments of this application are merely used as examples to describe the structure and the function of the direct current-to-direct current conversion module provided in the embodiments of this application, and do not constitute a limitation on specific quantities.

In a possible implementation, each direct current-to-direct current conversion module may further include an electrical energy processing unit. The electrical energy processing unit may include an inductor-inductor-capacitor (LLC) circuit. The electrical energy processing unit may have a switching frequency control processing capability, or have a soft switching adjustment capability. The electrical energy processing unit may process a voltage frequency of a direct current provided by a previous stage of module, or process harmonics to improve the quality of electrical energy, and then provide the processed electrical energy to each first energy supply unit and each second energy supply unit. A capability or a function of the electrical energy processing unit is not excessively limited in the embodiments of this application.

Referring back to FIG. 2A and FIG. 2B, each direct current-to-direct current conversion module may further include at least one first switching unit. A quantity of first switching units may be the same as that of second energy supply units included in the direct current-to-direct current conversion module, and there is a one-to-one correspondence between the first switching units and the second energy supply units. In other words, one second energy supply unit corresponds to one first switching unit, and one first switching unit corresponds to one second energy supply unit. The second energy supply unit may be coupled to the first power sharing bus and the second power sharing bus via a corresponding first switching unit.

Referring to FIG. 2A and FIG. 2B, the first switching unit may have a gating capability, and may connect an output end of a corresponding second energy supply unit to the first power sharing bus, so that electrical energy output by the corresponding second energy supply unit is transmitted to the first power sharing bus. Alternatively, the first switching unit may connect the output end of the corresponding second energy supply unit the first power sharing bus, so that the electrical energy output by the corresponding second energy supply unit is transmitted to the second power sharing bus. In some examples, the first switching unit may include one or more switches, for example, a relay switch (relay switch for short). FIG. 2A and FIG. 2B show an example structure of a first switching unit. The first switching unit may include a plurality of relay switches, such as a relay switch k1 and a relay switch k2. The relay switch k1 is coupled between the second energy supply unit and the first power sharing bus. The relay switch k1 may be activated or turned on to transmit the electrical energy output by the second energy supply unit to the first power sharing bus. The relay switch k2 is coupled between the second energy supply unit and the second power sharing bus. The relay switch k2 may be activated or turned on to transmit the electrical energy output by the second energy supply unit to the second power sharing bus. Generally, at most one of the plurality of relay switches in the first switching unit is activated or turned on at a same moment.

Each first output end in the charging system is coupled to the first power sharing bus and a charging apparatus. Each first output end may be configured to obtain a power from the first power sharing bus and provide the power to the coupled charging apparatus. In some examples, as shown in FIG. 2A and FIG. 2B, the first output end may be coupled to the charging apparatus via a contactor (or a switch). When the contactor is in an on state, the first output end is connected to the charging apparatus. When the contactor is in an off state, the first output end is disconnected from the charging apparatus.

Each second output end in the charging system is coupled to the second power sharing bus and a charging apparatus. Each second output end may be configured to obtain a power from the second power sharing bus and provide the power to the coupled charging apparatus. In some examples, as shown in FIG. 2A and FIG. 2B, the second output end may be coupled to the charging apparatus via a contactor (or a switch). When the contactor is in an on state, the second output end is connected to the charging apparatus. When the contactor is in an off state, the second output end is disconnected from the charging apparatus. Each charging apparatus described above may be coupled to one object to be charged.

It can be learned from the foregoing description that in the charging system, the first energy supply unit of the direct current-to-direct current conversion module is coupled only to the first power sharing bus, and the first energy supply unit may be coupled only to the first power sharing bus. The second energy supply unit may be coupled not only to the first power sharing bus, but also to the second power sharing bus, and the second energy supply unit may provide electrical energy for the first power sharing bus or for the second power sharing bus.

In the embodiments of this application, the first power sharing bus can obtain electrical energy provided by the first energy supply unit in the plurality of direct current-to-direct current conversion modules, and can also obtain electrical energy provided by the second energy supply unit. The first output end of the charging system can obtain electrical energy from the first power sharing bus, and provide the electrical energy to a coupled charging apparatus (such as a charging terminal or a charger).

In contrast with a one-to-one correspondence between existing charging piles and vehicles to be charged, in the charging system provided in this application, there is no one-to-one correspondence between direct current-to-direct current conversion modules and vehicles to be charged. Referring to FIG. 3A and FIG. 3B, the first energy supply unit A1 in the direct current-to-direct current conversion module M1 outputs electrical energy to the first power sharing bus, and the first output ends such as a first output end 1 and a first output end 2 may separately obtain electrical energy from the first power sharing bus. For another example, the first energy supply unit A1 in the direct current-to-direct current conversion module M1 and a second energy supply unit B1 in the direct current-to-direct current conversion module M2 separately output electrical energy to the first power sharing bus, and the first output end 1 may obtain electrical energy from the first power sharing bus. It can be learned that the first power sharing bus may obtain electrical energy provided by one or more direct current-to-direct current conversion modules. Similarly, the second power sharing bus may obtain electrical energy provided by the second energy supply unit in the plurality of direct current-to-direct current conversion modules. Any direct current-to-direct current conversion module in the charging system may output electrical energy to the first power sharing bus, and any first output end coupled to the first power sharing bus may obtain electrical energy from the first power sharing bus. It can be learned that in the charging system provided in this embodiment of this application, there may be no one-to-one correspondence between the first output ends and the direct current-to-direct current conversion modules, so that power allocation in the charging system can be more flexible.

In some scenarios, the first power sharing bus and the second power sharing bus may be respectively configured to provide different power levels. For example, the first output end coupled to the first power sharing bus may provide low-power electrical energy, so that the charging apparatus coupled to the first output end can provide low-power electrical energy for the object to be charged. The second output end coupled to the second power sharing bus may provide high-power electrical energy, so that the charging apparatus coupled to the second output end can provide high-power electrical energy for the object to be charged.

In some scenarios, the first energy supply units in each direct current-to-direct current conversion module in the charging system may have the same specification, structure, standard, or maximum output power. In some scenarios, in the charging system, the first energy supply units in different direct current-to-direct current conversion modules may have different specifications, structures, standards, or maximum output powers. Alternatively, the first energy supply units in the same direct current-to-direct current conversion module may have different specifications, structures, standards, or maximum output powers. This is not excessively limited in this application.

Similarly, in some scenarios, the second energy supply units in each direct current-to-direct current conversion module in the charging system may have the same specification, structure, standard, or maximum output power. In some scenarios, in the charging system, the second energy supply units in different direct current-to-direct current conversion modules may have different specifications, structures, standards, or maximum output powers. Alternatively, the second energy supply units in the same direct current-to-direct current conversion module may have different specifications, structures, standards, or maximum output powers. This is not excessively limited in this application.

Similarly, in some scenarios, each first output end in the charging system may have the same specification, structure, standard, or maximum output power. In some scenarios, in the charging system, different first output ends may have different specifications, structures, standards, or maximum output powers.

In some scenarios, each second output end in the charging system may have the same specification, structure, standard, or maximum output power. In some scenarios, in the charging system, different second output ends may have different specifications, structures, standards, or maximum output powers.

In a possible implementation, there may be a plurality of direct current-to-direct current conversion modules with different direct current-to-direct current conversion module specifications (standards or structures) in the charging system. For example, a first direct current-to-direct current conversion module may include one first energy supply unit and one second energy supply unit. A second direct current-to-direct current conversion module may include two first energy supply units and one second energy supply unit. A quantity of first energy supply units and a quantity of second energy supply units in each direct current-to-direct current conversion module may be set according to an actual application scenario. This is not excessively limited in this embodiment of this application.

In another possible implementation, to facilitate power scheduling or power allocation for the charging system, each direct current-to-direct current conversion module may have the same specification (standard or structure). For example, a quantity of first energy supply units in each direct current-to-direct current conversion module may be the same, and maximum powers of electrical energy that can be output by the first energy supply units are the same. In addition, a quantity of second energy supply units in each direct current-to-direct current conversion module may be the same, and maximum powers of electrical energy that can be output by the second energy supply units are the same. A rated power of each direct current-to-direct current conversion module is the same. The rated power of the direct current-to-direct current conversion module may be understood as a maximum power that can be output by the direct current-to-direct current conversion module.

In an example, a maximum power of electrical energy that can be output by a first energy supply unit in any direct current-to-direct current conversion module may be less than a rated power of the direct current-to-direct current conversion module to which the first energy supply unit belongs. As shown in FIG. 3A and FIG. 3B, a maximum power of electrical energy that can be output by the first energy supply unit A1 in the direct current-to-direct current conversion module M1 is less than a rated power of the direct current-to-direct current conversion module M1. For another example, a maximum power of electrical energy that can be output by the first energy supply unit A1 in the direct current-to-direct current conversion module M2 may be less than a rated power of the direct current-to-direct current conversion module M2.

In a possible design, a maximum power of electrical energy that can be output by a second energy supply unit in any direct current-to-direct current conversion module may be a rated power of the direct current-to-direct current conversion module to which the second energy supply unit belongs. As shown in FIG. 3A and FIG. 3B, a maximum power of electrical energy that can be output by the second energy supply unit B1 in the direct current-to-direct current conversion module M1 may be a rated power of the direct current-to-direct current conversion module M1. For another example, a maximum power of electrical energy that can be output by the second energy supply unit B1 in the direct current-to-direct current conversion module M2 may be a rated power of the direct current-to-direct current conversion module M2.

In another possible design, a maximum power of electrical energy that can be output by a second energy supply unit in any direct current-to-direct current conversion module may be a rated power of the direct current-to-direct current conversion module to which the second energy supply unit belongs. In addition, a maximum power of electrical energy that can be output by a first energy supply unit in any direct current conversion module is less than a rated power of the direct current-to-direct current conversion module to which the first energy supply unit belongs. Therefore, in any direct current-to-direct current conversion module, the maximum power of electrical energy that can be output by the second energy supply unit is greater than the maximum power of electrical energy that can be output by the first energy supply unit.

Generally, an energy supply unit can output electrical energy within a specific power range. For example, the first energy supply unit can output electrical energy ranging from 0 to P1, and a maximum power in the power range is P1, which is also the maximum power of electrical energy that can be output by the first energy supply unit. For another example, the second energy supply unit can output electrical energy ranging from 0 to P2, and a maximum power in the power range is P2, which is also the maximum power of electrical energy that can be output by the second energy supply unit. In addition, P2 is greater than P1.

In the foregoing embodiment, the maximum power of electrical energy that can be output by the second energy supply unit may be a rated power of the direct current-to-direct current conversion module to which the second energy supply unit belongs. The second energy supply unit can provide a relatively wide power range, or the second energy supply unit can output different power levels. For example, the second energy supply unit may output a relatively large power to the second power sharing bus, so that the second output end coupled to the second power sharing bus can provide a relatively large charging power to the object to be charged, and the first power sharing bus and the second power sharing bus in the charging system can separately provide different levels of power. In addition, an output power of any direct current-to-direct current conversion module may be flexibly allocated to the first power sharing bus and/or the second power sharing bus, which can improve utilization of the direct current-to-direct current conversion module and charging efficiency of the charging system.

In addition, the maximum power of electrical energy that can be output by the second energy supply unit is equal to the rated power of the direct current-to-direct current conversion module to which the second energy supply unit belongs. In addition, a power may be output to the first power sharing bus or the second power sharing bus. In this way, the second energy supply unit can output, to the first power sharing bus or the second power sharing bus, a remaining power (a power that is to be output or that has not been output) of the direct current-to-direct current conversion module to which the second energy supply unit belongs.

For example, referring still to FIG. 3A and FIG. 3B, it is assumed that the rated power of the direct current-to-direct current conversion module M1 is 60 kW, the maximum output power of each first energy supply unit is 20 kW, and the maximum output power of each second energy supply unit is 60 kW. A power that has been currently output by the direct current-to-direct current conversion module M1 is 40 kW, where in the direct current-to-direct current conversion module M1, a power that has been output by the first energy supply unit A1 is 20 kW, and a power that has been output by the first energy supply unit A2 is 20 kW. A remaining power of the direct current-to-direct current conversion module M1 is equal to a difference between the rated power (60 kW) and the power (20 kW + 20 kW) that have been output, that is, 20 kW. In this case, the second energy supply unit B 1 of the direct current-to-direct current conversion module M1 may output 20 kW to the first power sharing bus or the second power sharing bus, so that the remaining power of the direct current-to-direct current conversion module M1 is utilized, greatly improving utilization of the direct current-to-direct current conversion module M1.

For another example, referring still to FIG. 3A and FIG. 3B, the rated power of the direct current-to-direct current conversion module M2 is 60 kW, the maximum output power of each first energy supply unit is 20 kW, and the maximum output power of each second energy supply unit is 60 kW. A power that has been output by the direct current-to-direct current conversion module M2 is 30 kW, where in the direct current-to-direct current conversion module M2, a power that has been output by the first energy supply unit A1 is 10 kW, and a power that has been output by the first energy supply unit A2 is 20 kW. A remaining power of the direct current-to-direct current conversion module M2 is a difference between the rated power (60 kW) and the power (20 kW + 10 kW) that have been output, that is, 30 kW. In this case, the second energy supply unit B1 of the direct current-to-direct current conversion module M2 may output 30 kW to the first power sharing bus or the second power sharing bus. It can be learned that utilization of the direct current-to-direct current conversion module M2 is greatly improved.

It can be learned from the description of the foregoing embodiment that the second energy supply unit of each direct current-to-direct current conversion module in the charging system can output the remaining power of the direct current-to-direct current conversion module to the first power sharing bus or the second power sharing bus, so that the remaining power of each direct current-to-direct current conversion module is fully utilized, improving utilization of the direct current-to-direct current conversion module in the charging system.

In the charging system provided in this embodiment of this application, the direct current-to-direct current conversion module has a plurality of outputs, which can separately output a power to the first power sharing bus or the second power sharing bus. The first power sharing bus may be coupled to a plurality of first output ends, the second power sharing bus may be coupled to a plurality of second output ends, and both the first power sharing bus and the second power sharing bus can support power sharing. Such a design can reduce a power loss of the charging system, and improve utilization of the direct current-to-direct current conversion module. Each direct current-to-direct current conversion module may include at least one first energy supply unit and at least one second energy supply unit. An output power range of the first energy supply unit is different from an output power range of the second energy supply unit, so that the direct current-to-direct current conversion module can allocate power at different levels, to support charging of objects to be charged that have different power requirements. In addition, the charging system has a relatively high compatibility, and a newly added direct current-to-direct current conversion module can be connected to the first power sharing bus and the second power sharing bus.

In a possible case, for example, the charging system may be applied to a low-power charging scenario. In each direct current-to-direct current conversion module of the charging system, a maximum value of an output voltage of the first energy supply unit may be less than or equal to 1,000 volts, and/or a minimum value of the output voltage of the first energy supply unit is greater than or equal to 150 volts. A maximum value of an output voltage of the second energy supply unit may be less than or equal to 1,000 volts, and/or a minimum value of the output voltage of the second energy supply unit is greater than or equal to 150 volts. In some possible scenarios, a maximum power of the direct current electrical energy that can be provided by each first output end of the charging system to the coupled charging apparatus is 20 kilowatts.

Based on the charging system provided in any one of the foregoing embodiments, the charging system may further include a control module. The control module may be communicatively connected to each direct current-to-direct current conversion module. The control module may control each direct current-to-direct current conversion module. As shown in FIG. 2A and FIG. 2B, in the charging system, the control module may send a message, data, an instruction, or the like to each direct current-to-direct current conversion module, so that the direct current-to-direct current conversion module adjusts an output power based on the received message, data, or instruction. In the embodiments of this application, the communication connection may include but is not limited to a communication manner based on a bus technology, a communication manner based on a mobile communication technology, a communication manner based on a wireless local area network technology, or a communication manner based on a Bluetooth technology. In some scenarios, the control module and the direct current-to-direct current conversion modules may be in a same local area network.

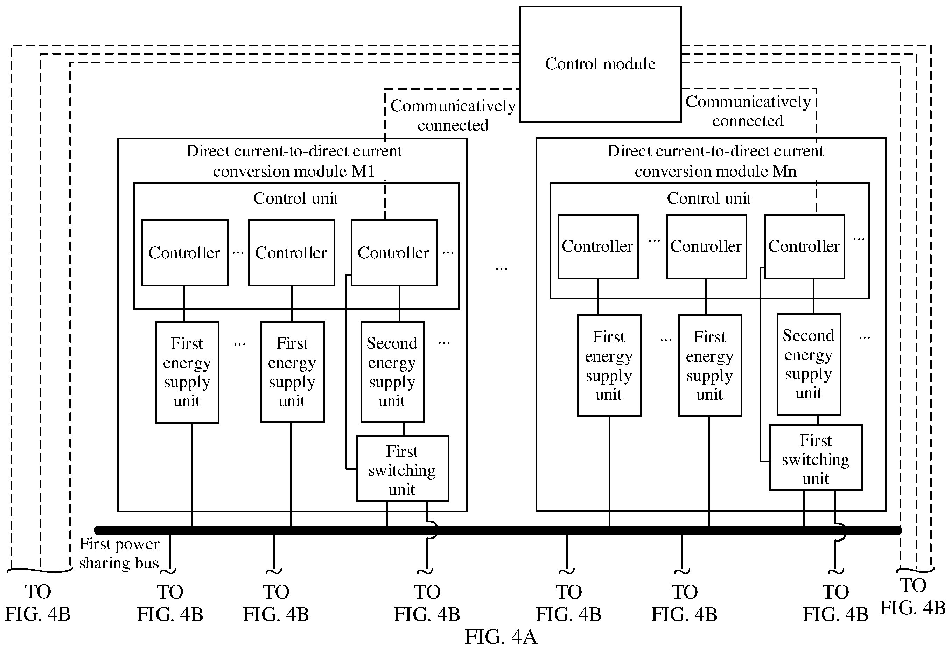

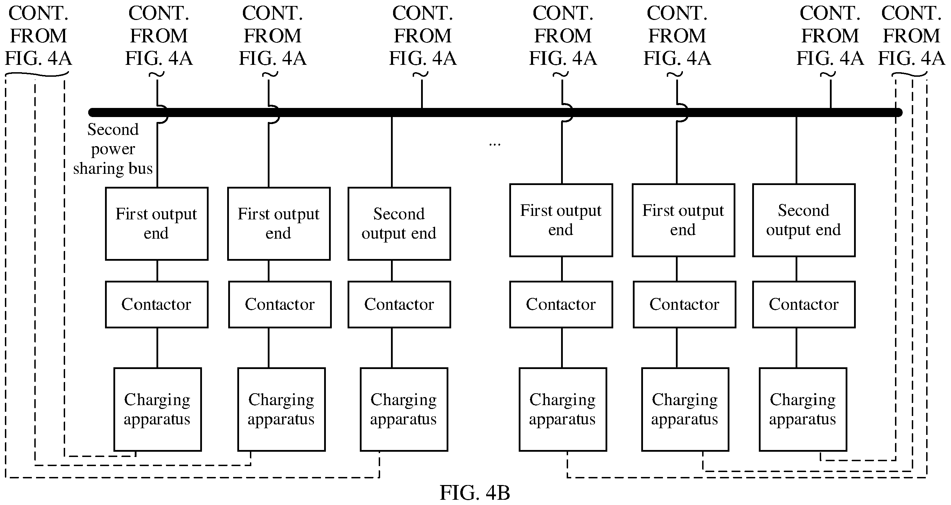

Each direct current-to-direct current conversion module in the charging system may further include a control unit. As shown in FIG. 4A and FIG. 4B, the control unit may be communicatively connected to the control module in the charging system. The control unit may receive the message, data, instruction, or the like sent by the control module of the charging system, and the control unit may also send a message, data, an instruction, or the like to the control module.

In a possible implementation, the control unit is coupled to each first energy supply unit and each second energy supply unit, and may be configured to control the first energy supply unit to output electrical energy, or control the first energy supply unit to adjust a power of the output electrical energy. The control unit may also be configured to control the second energy supply unit to output electrical energy, or control the second energy supply unit to adjust a power of the output electrical energy, or control the first switching unit in the direct current-to-direct current conversion module, so that the first switching unit transmits the electrical energy output by the corresponding second energy supply unit to the first power sharing bus or the second power sharing bus.

In a possible design, a control unit of any direct current-to-direct current conversion module may include a plurality of controllers. As shown in FIG. 4A and FIG. 4B, the plurality of controllers are in a one-to-one correspondence with all first energy supply units and second energy supply units in the direct current-to-direct current conversion module. In other words, one controller may correspond to only one first energy supply unit, or one controller may correspond to only one second energy supply unit. One first energy supply unit may correspond to only one controller, and one second energy supply unit may correspond to only one controller. The controller corresponding to the first energy supply unit may be configured to acquire a power supply parameter of the first energy supply unit, for example, a current and/or a voltage of the electrical energy output by the first energy supply unit. The power supply parameter acquired by the controller may be used to determine an output power status of the first energy supply unit. The controller corresponding to the first energy supply unit may also be configured to control the first energy supply unit, for example, control a power of the electrical energy output by the first energy supply unit.

The controller corresponding to the second energy supply unit may be configured to acquire a power supply parameter of the second energy supply unit, for example, a current and/or a voltage of the electrical energy output by the second energy supply unit. The power supply parameter acquired by the controller may be used to determine an output power status of the second energy supply unit. The controller corresponding to the second energy supply unit may also be configured to control the second energy supply unit, for example, control a power of the electrical energy output by the second energy supply unit. The controller corresponding to the second energy supply unit may further control the first switching unit corresponding to the second energy supply unit, for example, control a relay switch in the first switching unit.

The control module may establish a communication connection to one controller in the control unit, and the controller is denoted as a target controller. In the control unit shown in FIG. 4A and FIG. 4B, a controller corresponding to one second energy supply unit is a target controller, and is communicatively connected to the control module. The target controller in the control unit may receive power supply parameters provided by other controllers, and forward the power supply parameters to the control module, to assist the other controllers in reporting the power supply parameters to the control module. It should be understood that the target controller may be used as a primary controller in the control unit to report a power supply parameter of each first energy supply unit and a power supply parameter of each second energy supply unit to the control module.

The control unit in each direct current-to-direct current conversion module may report the acquired power supply parameters to the control module, so that the control module determines, based on the power supply parameters, an output power status of each first energy supply unit and an output power status of each second energy supply unit, and the control module can determine (learn or calculate) power information of each direct current-to-direct current conversion module, for example, an output power and a remaining power (a power to be output).

The control module may obtain the rated power of each direct current-to-direct current conversion module in advance, and determine a remaining power of each direct current-to-direct current conversion module based on the power supply parameters reported by each control unit. The power supply parameters reported by each control unit may include an identifier of each first energy supply unit and the power supply parameter of the first energy supply unit, and an identifier of each second energy supply unit and the power supply parameter of the second energy supply unit. Alternatively, the power supply parameters reported by each control unit may include an identifier of a first energy supply unit whose power has been output and a power supply parameter of the first energy supply unit, and an identifier of a second energy supply unit whose power has been output and a power supply parameter of the second energy supply unit. The control module may determine, based on the power supply parameters reported by each control unit, whether each first energy supply unit in each direct current-to-direct current conversion module has output a power, and determine a power output by the first energy supply unit that has output the power. The control module may also determine, based on the power supply parameters reported by each control unit, whether each second energy supply unit has output a power, and determine a power output by the second energy supply unit that has output the power.

Based on the charging system provided in any one of the foregoing embodiments, referring still to FIG. 2A and FIG. 2B, the charging system may further include an alternating current-to-direct current conversion module. The control module may be communicatively connected to the alternating current-to-direct current conversion module, so that the alternating current-to-direct current conversion module adjusts an output power based on a received message, data, or instruction. An input side of the alternating current-to-direct current conversion module may be coupled to an alternating current power source, for example, to an alternating current grid. An output side of the alternating current-to-direct current conversion module may be coupled to each direct current-to-direct current conversion module. The alternating current-to-direct current conversion module may convert an alternating current output by the alternating current power source into a direct current, and then provide the direct current for each direct current-to-direct current conversion module. The charging system may further include a direct current bus, the output side of the alternating current-to-direct current conversion module is coupled to the direct current bus, and the alternating current-to-direct current conversion module may output the direct current to the direct current bus. An input side of each direct current-to-direct current conversion module is coupled to the direct current bus, and each direct current-to-direct current conversion module may obtain the direct current from the direct current bus.

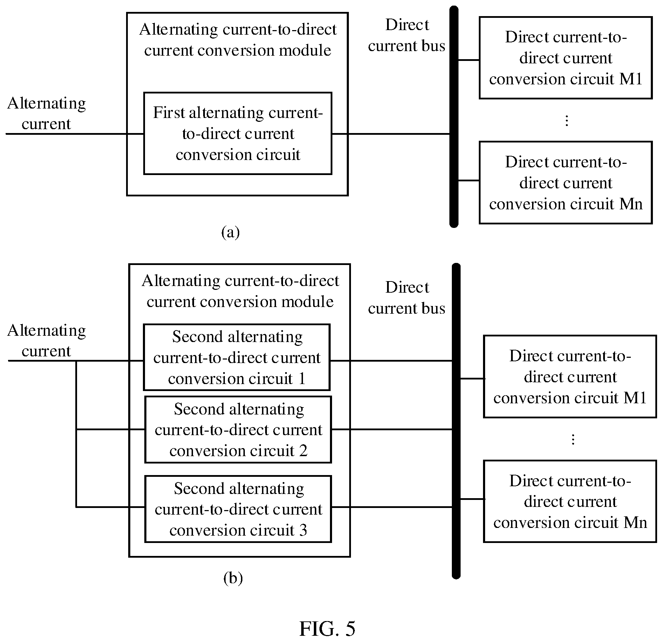

In a possible design, referring to (a) in FIG. 5, the alternating current-to-direct current conversion module may include a first alternating current-to-direct current conversion circuit, and a maximum power of direct current electrical energy that can be output by the first alternating current-to-direct current conversion circuit to the direct current bus may be equal to or less than a sum of rated powers of all direct current-to-direct current conversion modules in the charging system. In another possible design, referring to (b) in FIG. 5, the alternating current-to-direct current conversion module may include a plurality of second alternating current-to-direct current conversion circuits, which may be respectively denoted as a second alternating current-to-direct current conversion circuit 1, a second alternating current-to-direct current conversion circuit 2, a second alternating current-to-direct current conversion circuit 3, and the like. A maximum power of direct current electrical energy that can be output by each second alternating current-to-direct current conversion circuit to the direct current bus is less than the maximum power of the direct current electrical energy that can be output by the first alternating current-to-direct current conversion circuit to the direct current bus. In addition, a total maximum power of direct current electrical energy that can be output by all second alternating current-to-direct current conversion circuits to the direct current bus may be equal to or less than the sum of the rated powers of all the direct current-to-direct current conversion modules in the charging system. In some application scenarios, for example, in a low-power charging scenario, an output voltage of the alternating current-to-direct current conversion module may be less than or equal to 1,000 volts. Alternatively, the output voltage of the alternating current-to-direct current conversion module may be less than or equal to 850 volts. The output voltage of the alternating current-to-direct current conversion module may be less than or equal to 820 volts. An output voltage range of the alternating current-to-direct current conversion module may be configured according to requirements, which is not excessively limited in the embodiments of this application.

Based on the charging system provided in any one of the foregoing embodiments, the charging system may further include a charging apparatus coupled to the first output end and a charging apparatus coupled to the second output end. As shown in FIG. 4A and FIG. 4B, the control module may be communicatively connected to each charging apparatus. A dashed line shown in FIG. 4A and FIG. 4B represents a communication connection relationship. The charging apparatus may be a charging terminal or a charger. Both the charging terminal and the charger may cooperate with a charging port of a vehicle to be charged.

Generally, the charging terminal may include a control unit, a power distribution communication unit, a metering unit, and the like. The control unit may control the power distribution unit and the metering unit. The power distribution communication unit may exchange a charging parameter with the vehicle to be charged, determine a charging power suitable for the vehicle to be charged, and transmit the charging power to the control module of the charging system, or match an actual required power of the vehicle to be charged. The metering unit may determine a status of electrical energy provided by the charging terminal for the object to be charged, so as to collect statistics on fees of charging the object to be charged.

In a possible case, the control module of the charging system may obtain an expected input power (denoted as a first power parameter) of the object to be charged, and then allocate a first output end to the object to be charged, so that the object to be charged is connected to a charging apparatus coupled to the allocated first output end. The expected input power of the object to be charged may represent an expected input power when the object to be charged is charged.

The charging apparatus may report an actual required power (denoted as a second power parameter) of the object to be charged to the control module. The control module may control, based on the second power parameter of the object to be charged, the first energy supply unit and/or the second energy supply unit of the direct current-to-direct current conversion module in the charging system to output electrical energy to the first power sharing bus. The first output end allocated to the object to be charged obtains the second power parameter of the object to be charged from the first power sharing bus, and charge the object to be charged.

In another possible case, the control module of the charging system may obtain the expected input power of the object to be charged, and then allocate a second output end to the object to be charged, so that the object to be charged is connected to a charging apparatus coupled to the allocated second output end. The charging apparatus may report the second power parameter of the object to be charged to the control module. The control module may control, based on the actual required power of the object to be charged, the second energy supply unit of the direct current-to-direct current conversion module in the charging system to output electrical energy to the second power sharing bus. The second output end allocated to the object to be charged obtains the actual required power of the object to be charged from the second power sharing bus, and charge the object to be charged.

In the embodiments of this application, the object to be charged may be an electric vehicle, and a drive system of the electric vehicle may be powered by a direct current power source, so as to generate a traction force used for vehicle propulsion. The electric vehicle may include but is not limited to a battery electric vehicle, a plug-in hybrid electric vehicle, and an extended-range electric vehicle. These vehicles may include a coach, a crossover vehicle, a multi-purpose vehicle, a recreational vehicle, a truck, a bus, a commercial vehicle, and the like. The object to be charged may also include but is not limited to an industrial vehicle, an agricultural vehicle, an airplane, a ship, a train, a personal mobility device, a robot, and a mobility platform similar to the ground, to achieve the objectives of the embodiments of this application.

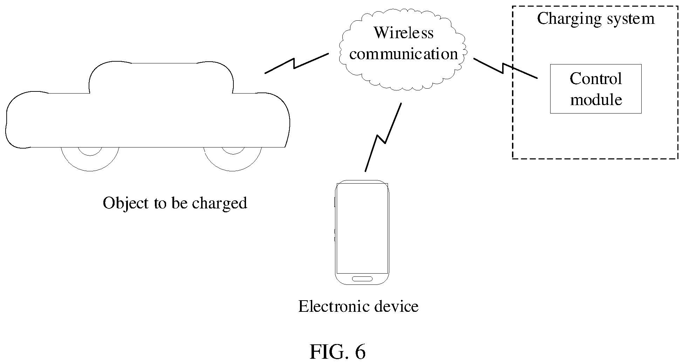

Referring to FIG. 6, the control module may obtain the expected input power of the object to be charged in, for example but not limited to, the following manners:
Manner 1: The control module may be communicatively connected to the object to be charged, and the object to be charged may send, to the control module, a charging request carrying a first charging parameter. The first charging parameter may represent an expected charging duration of the object to be charged. The control module may determine, based on a preset correspondence between an expected charging duration and an expected input power, an expected input power corresponding to the first charging parameter, that is, determine the first power parameter, so that the control module obtains the first power parameter, and the control module allocates the first output end or the second output end to the object to be charged.
Manner 2: The control module may be communicatively connected to an electronic device, and the electronic device may send, to the control module, a charging request that carries a first charging parameter. The control module may determine, based on a preset correspondence between an expected charging duration and an expected input power, an expected input power corresponding to the first charging parameter, that is, determine the first power parameter, so that the control module obtains the first power parameter, and the control module allocates the first output end or the second output end to the object to be charged.

The electronic device in the foregoing manner 2 may be a mobile terminal, a personal terminal, a smartphone, a tablet computer, or the like. The electronic device may display a target interface for selecting the expected charging duration, so that the user selects the expected charging duration in the target interface. The target interface may include but is not limited to an application interface or an applet interface. After the user selects the expected charging duration in the target interface, the electronic device may be triggered to send the first charging parameter to the control module, where the first charging parameter may represent the expected charging duration selected by the user. In some scenarios, the electronic device may send, to the control module, a charging request that carries an identifier of the object to be charged and the first charging parameter, so that the control module allocates a first output end or a second output end to the object to be charged that corresponds to the identifier of the object to be charged.

The control module may compare the first power parameter with a specified power parameter threshold. The power parameter threshold may represent a maximum power of direct current electrical energy that can be output by a first energy supply unit of any direct current-to-direct current conversion module in the charging system (that is, a maximum output power of the first energy supply unit). For ease of description, in the embodiments of this application, the maximum power of the direct current electrical energy that can be output by the first energy supply unit is denoted as a maximum output power of the first energy supply unit. Similarly, a maximum power of direct current electrical energy that can be output by the second energy supply unit is denoted as a maximum output power of the second energy supply unit. A maximum power of direct current electrical energy that can be output by the direct current-to-direct current conversion module is denoted as a maximum output power of the direct current-to-direct current conversion module.

In some scenarios, the charging system may provide different levels of charging power. For example, a charging power that can be provided by the first output end is less than a charging power that can be provided by the second output end. If the first power parameter of the object to be charged is greater than the preset power parameter threshold, it may indicate that the expected input power of the object to be charged is a high-level charging power. If the first power parameter of the object to be charged is less than or equal to the preset power parameter threshold, it may indicate that the expected input power of the object to be charged is a low-level charging power.

In some possible cases, if the first power parameter is less than or equal to the preset power parameter threshold, and there is an unallocated first output end (that is, an idle first output end) in the at least one first output end, the control module may allocate one idle first output end from all first output ends of the charging system to the object to be charged. For ease of description, in the embodiments of this application, an unallocated first output end is denoted as an idle first output end. Similarly, an unallocated second output end is denoted as an idle second output end. A first energy supply unit that does not output direct current electrical energy in the direct current-to-direct current conversion module, that is, a first energy supply unit that does not work, is denoted as an idle first energy supply unit. A second energy supply unit that does not output direct current electrical energy in the direct current-to-direct current conversion module, that is, a second energy supply unit that does not work, is denoted as an idle second energy supply unit.

In other possible cases, if the first power parameter is less than or equal to the power parameter threshold, and there is no idle first output end in the at least one first output end, that is, there is no idle first output end in all first output ends in the charging system, the control module may allocate one idle second output end from all second output ends in the charging system to the object to be charged.

In still other possible cases, if the first power parameter is greater than the preset power parameter, the control module may allocate one idle second output end from all second output ends in the charging system to the object to be charged.

It should be understood that, after the control module allocates the first output end (or the second output end) to the object to be charged, the control module may identify the first output end (or the second output end) as an allocated first output end (or second output end). After an object to be charged that is coupled to the allocated first output end (or second output end) completes charging and is disconnected from the first output end, the control module may identify the first output end as an idle first output end (or second output end).

In a possible design, the charging apparatus coupled to the first output end (or the charging apparatus coupled to the second output end) may be communicatively connected to the control module of the charging system, and may report, to the control module, parameter information for charging a connected object to be charged, so that the control module controls the direct current-to-direct current conversion module in the charging system.

After being connected to the object to be charged, the charging apparatus may receive charging information of the object to be charged, where the charging information may include but is not limited to a charging voltage, a charging current, a battery state of charge (state of charge, SOC), an expected charging duration, and the like. The charging apparatus may report the charging information of the object to be charged to the control module, so that the control module determines an actual charging power of the object to be charged based on the charging information. Alternatively, the charging apparatus may determine the actual charging power of the object to be charged based on the charging information of the object to be charged, and report the actual charging power to the control module.

It can be learned that the first output end or the second output end allocated by the control module to the object to be charged may be denoted as a target output end. A charging apparatus coupled to the target output end may receive the charging information of the object to be charged, so as to determine an actual charging power (or referred to as an actual required power) of the object to be charged, which is denoted as a second power parameter of the object to be charged in the embodiments of this application.

According to the foregoing description, it should be understood that the first power parameter of the object to be charged may be used for the control module to allocate an output end to the object to be charged based on the first power parameter. The second power parameter may be used for the control module to control the direct current-to-direct current conversion module in the charging system based on the second power parameter.

In an example, if the target output end allocated by the control module to the object to be charged is an idle first output end, when controlling the direct current-to-direct current conversion module in the charging system based on the second power parameter of the object to be charged, the control module may control the first direct current-to-direct current conversion module in the charging system to output first direct current electrical energy to the first power sharing bus of the charging system. A power of the first direct current electrical energy is the same as the second power parameter. The first direct current-to-direct current conversion module is a direct current-to-direct current conversion module whose remaining power (a difference between the maximum output power of the first direct current-to-direct current conversion module and a power of the first direct current-to-direct current conversion module that has been output) is greater than or equal to the second power parameter.

For example, the control module may control an idle first energy supply unit in the first direct current-to-direct current conversion module to output the first direct current electrical energy to the first power sharing bus. For example, a remaining power of the direct current-to-direct current conversion module M2 is greater than or equal to the second power parameter, and the control module may control an idle first energy supply unit in the direct current-to-direct current conversion module M2 to output direct current electrical energy whose power is the second power parameter to the first power sharing bus, so that the object to be charged obtains electrical energy of the second power parameter from the first power sharing bus through the allocated first output end.

In another example, if the target output end allocated by the control module to the object to be charged is an idle first output end, when the control module controls the direct current-to-direct current conversion module in the charging system based on the second power parameter of the object to be charged, the control module may control a plurality of direct current-to-direct current conversion modules (denoted as a plurality of second direct current-to-direct current conversion modules for distinguishing from the foregoing first direct current-to-direct current conversion module) to separately output direct current electrical energy to the first power sharing bus. In addition, a total power of the direct current electrical energy output by the plurality of second direct current-to-direct current conversion modules is the second power parameter, where there may be a target second direct current-to-direct current conversion module in the plurality of second direct current-to-direct current conversion modules, and a remaining power of the target second direct current-to-direct current conversion module is less than the second power parameter. In other words, the plurality of second direct current-to-direct current conversion modules may include a direct current-to-direct current conversion module whose remaining power is less than the second power parameter. A target direct current-to-direct current conversion module cannot individually meet a charging requirement of the object to be charged. The control module may control the target direct current-to-direct current conversion module and other direct current-to-direct current conversion modules to separately output direct current electrical energy, so that a total power of the direct current electrical energy output by the target direct current-to-direct current conversion module and the other direct current-to-direct current conversion modules is the same as the second power parameter. In this way, the remaining power of the target direct current-to-direct current conversion module is scheduled, and the remaining power of the target direct current-to-direct current conversion module is flexibly utilized, thereby avoiding a waste of the remaining power of the target direct current-to-direct current conversion module.

The control module may control an idle first energy supply unit or an idle second energy supply unit in the target second direct current-to-direct current conversion module to output second direct current electrical energy to the first power sharing bus, where a power of the second direct current electrical energy is the same as the remaining power of the target second direct current-to-direct current conversion module. In addition, other second direct current-to-direct current conversion modules in the plurality of second direct current-to-direct current conversion modules are controlled to output third direct current electrical energy, where a sum of powers of the third direct current electrical energy and the second direct current electrical energy is the second power parameter. It can be learned that the target second direct current-to-direct current conversion module outputs all power under the control of the control module, that is, all direct current electrical energy output by the target second direct current-to-direct current conversion module is the maximum output power of the target second direct current-to-direct current conversion module.

In a possible design, the control module may control the plurality of second direct current-to-direct current conversion modules to separately output direct current electrical energy to the first power sharing bus, and a total power of the direct current electrical energy output by the plurality of second direct current-to-direct current conversion modules is the second power parameter. Each second direct current-to-direct current conversion module is the foregoing target second direct current-to-direct current conversion module, that is, a remaining power of each second direct current-to-direct current conversion module may be less than the second power parameter. In such a design, remaining powers of the plurality of direct current-to-direct current conversion modules that cannot individually meet the charging requirement of the object to be charged are scheduled to separately output direct current electrical energy whose total power can meet the charging requirement of the object to be charged, so that the remaining power of the target direct current-to-direct current conversion module can be fully utilized, thereby avoiding a waste of the remaining power.

For example, a remaining power of one target second direct current-to-direct current conversion module is less than the second power parameter, and therefore cannot individually provide the actual charging power of the object to be charged to the second power sharing bus. However, the sum of the remaining powers of the plurality of target second direct current-to-direct current conversion modules may be greater than the second power parameter, and the remaining powers of the plurality of target second direct current-to-direct current converters are output to the first power sharing bus, to meet the requirement of the actual charging power of the object to be charged. Therefore, the control module may control the plurality of target second direct current-to-direct current conversion modules to separately output a power to the first power sharing bus, and the sum of the output powers is equal to the second power parameter, so that the remaining power of each target second direct current-to-direct current conversion module is scheduled to charge the object to be charged, thereby improving utilization of each target second direct current-to-direct current conversion module, and improving charging efficiency of the charging system.

For example, both the direct current-to-direct current conversion module M3 and the direct current-to-direct current conversion module M4 are direct current-to-direct current conversion modules whose remaining powers are less than the second power parameter. The control module may control an idle first energy supply unit (or second energy supply unit) in the direct current-to-direct current conversion module M3 to output electrical energy to the first power sharing bus, the power being P3 (P3 is less than or equal to the remaining power of the direct current-to-direct current conversion module M3); and control an idle first energy supply unit (or second energy supply unit) in the direct current-to-direct current conversion module M4 to output electrical energy to the first power sharing bus, the power being P4 (P4 is less than or equal to the remaining power of the direct current-to-direct current conversion module M4). A sum of P3 and P4 is equal to the second power parameter, so that the control module schedules the remaining powers of the direct current-to-direct current conversion module M3 and the direct current-to-direct current conversion module M4 to charge the object to be charged.

In still another example, if the target output end allocated by the control module to the object to be charged is an idle second output end, when controlling the direct current-to-direct current conversion module in the charging system based on the second power parameter, the control module may control a third direct current-to-direct current conversion module to output fourth direct current electrical energy to the second power sharing bus of the charging system, where a power of the fourth direct current electrical energy is the same as the second power parameter. In the embodiments of this application, a direct current-to-direct current conversion module whose remaining power is greater than or equal to the second power parameter and that includes an idle second energy supply unit is denoted as a third direct current-to-direct current conversion module.

The control module may control an idle second energy supply unit in one third direct current-to-direct current conversion module to output fourth direct current electrical energy to the second power sharing bus, that is, output electrical energy whose power is the second power parameter, so as to schedule the remaining power of the third direct current-to-direct current conversion module to charge the object to be charged.

In yet another example, if the target output end allocated by the control module to the object to be charged is an idle second output end, when controlling the direct current-to-direct current conversion module in the charging system based on the second power parameter, the control module may control a plurality of fourth direct current-to-direct current conversion modules to separately output direct current electrical energy to the second power sharing bus, where a total power of the direct current electrical energy output by the plurality of fourth direct current-to-direct current conversion modules is the same as the second power parameter. In the charging system, a direct current-to-direct current conversion module that includes an idle second energy supply unit may be denoted as a fourth direct current-to-direct current conversion module.

There may be one or more target fourth direct current-to-direct current conversion modules in the plurality of fourth direct current-to-direct current conversion modules. A remaining power of the target fourth direct current-to-direct current conversion module is less than the second power parameter. It can be learned that the control module may control the target fourth direct current-to-direct current conversion module to output direct current electrical energy to the second power sharing bus, so as to schedule the remaining power of the target fourth direct current-to-direct current conversion module. The control module may control an idle second energy supply unit of each fourth direct current-to-direct current conversion module to output a remaining power to the second power sharing bus.

In a possible implementation, the charging system may be disposed in a scenario such as an office area, an industrial area, or a supermarket. As an example, a working process of the charging system is described below with reference to an actual application scenario.

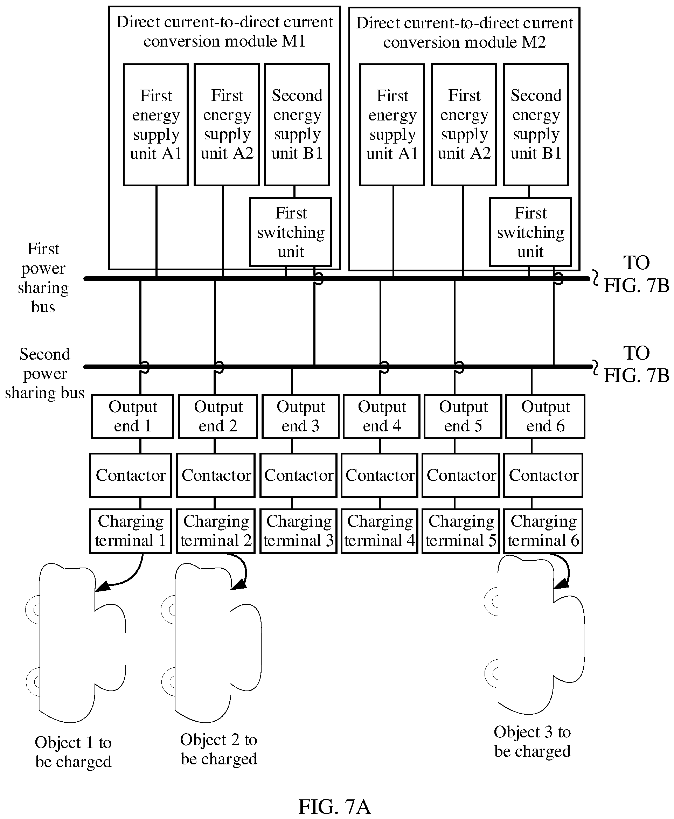

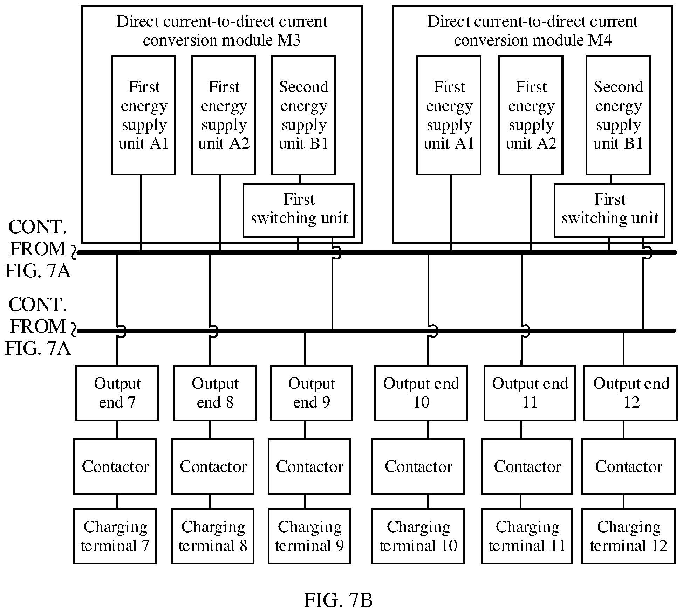

In an application scenario, referring to FIG. 7A and FIG. 7B, it is assumed that the charging system includes a plurality of direct current-to-direct current conversion modules. A rated power of each direct current-to-direct current conversion module is 30 kW. A maximum power of electrical energy that can be output by an alternating current-to-direct current conversion module in the charging system may be 60 kW.

Each direct current-to-direct current conversion module includes two first energy supply units and one second energy supply unit. In each direct current-to-direct current conversion module, an output power range of each first energy supply unit is 0-20 kW. An output power range of each second energy supply unit is 0-60 kW. As shown in FIG. 6, in the charging system, a first power sharing bus is coupled to eight first output ends, and a second power sharing bus is coupled to four second output ends. The first output ends and the second output ends of the charging system each are coupled to a charging terminal. In this embodiment of this application, the first output end is coupled to the first power sharing bus, and the second output end is coupled to the second power sharing bus. For ease of description, the first output end and the second output end are numbered together, denoted as an output end i (i is 1 to 12). Output ends 1, 2, 4, 5, 7, 8, 10, and 11 may be respectively the first output ends, and are coupled to the first power sharing bus. Output ends 3, 6, 9, and 12 may be respectively the second output ends, and are coupled to the second power sharing bus. The charging terminal coupled to the charging system is denoted as a charging terminal i (i is 1 to 12). Charging terminals 1, 2, 4, 5, 7, 8, 10, and 11 are respectively coupled to the output ends 1, 2, 4, 5, 7, 8, 10, and 11. Charging terminals 3, 6, 9, and 12 are respectively coupled to the output ends 3, 6, 9, and 12.

In some examples, the output ends 1, 2, 4, 5, 7, 8, 10, and 11 may have the same maximum output power. For example, the output ends 1, 2, 4, 5, 7, 8, 10, and 11 may each have a capability of providing a 20 kW power for the connected charging terminal. In other words, the maximum output power of the output ends 1, 2, 4, 5, 7, 8, 10, and 11 is configured to be 20 kW.

In other examples, the output ends 1, 2, 4, 5, 7, 8, 10, and 11 may have different maximum output powers. Some of the output ends 1, 2, 4, 5, 7, 8, 10, and 11 have the same maximum output power, for example, a first power; and the other output ends have the same maximum output power, for example, a second power, where the first power is different from the second power.

Similarly, in some examples, the output ends 3, 6, 9, and 12 may have the same maximum output power. For example, the output ends 3, 6, 9, and 12 may each have a capability of providing a 60 kW power for the connected charging terminal. In other words, the maximum output power of the output ends 3, 6, 9, and 12 is configured to be 60 kW.

In other examples, the output ends 3, 6, 9, and 12 may have different maximum output powers. Some of the output ends 3, 6, 9, and 12 have the same maximum output power, for example, a third power; and the other output ends have the same maximum output power, for example, a fourth power, where the third power is different from the fourth power.

It should be noted that, in the charging system provided in this embodiment of this application, a quantity, specifications, a standards, and the like of the first output ends, a quantity, specifications, standards, and the like of the second output ends, a quantity, specifications, standards, and the like of the charging terminals connected to the first output ends, and a quantity, specifications, standards, and the like of the charging terminals connected to the second output ends are merely used to describe the working process of the charging system, and do not constitute specific limitations on the charging system provided in this application.

It is assumed that among the output ends 3, 6, 9, and 12, the maximum output power of the output end 6 and the output end 12 is configured to be 60 kW, to meet a charging terminal that requires high-power charging. The other 10 output ends (the output ends 1, 2, 3, 4, 5, 7, 8, 9, 10, and 11) of the charging system are configured to provide 20 kW for a charging terminal, to meet an object to be charged that requires low-power charging.

The second energy supply unit may be configured to share a remaining power of the direct current-to-direct current conversion module. The remaining power of the direct current-to-direct current conversion module may be shared to the charging terminals 1, 2, 4, 5, 7, 8, 10, and 11 through the first power sharing bus. The remaining power of the direct current-to-direct current conversion module may be shared to the charging terminals 3, 6, 9, and 12 through the second power sharing bus.

The control module of the charging system may store a correspondence between an expected charging duration and an expected input power. The expected charging duration may be 0.5 hours, 2 hours, 4 hours, or 8 hours. An expected input power for 8 hours is 5 kW. An expected input power for 4 hours is 10 kW. An expected input power for 2 hours is 20 kW. An expected input power in 0.5 hour is 60 kW.

After receiving a charging request initiated by the object to be charged, the control module may obtain a remaining power (a power to be output) of each direct current-to-direct current conversion module, and an output power status of each first energy supply unit and an output power status of each second energy supply unit in each direct current-to-direct current conversion module, so as to allocate a charging terminal or an output end to the object to be charged.

Alternatively, the control module may periodically obtain a remaining power (a power to be output) of each direct current-to-direct current conversion module, and an output power status of each first energy supply unit and an output power status of each second energy supply unit in each direct current-to-direct current conversion module, so as to allocate a charging terminal or an output end to the object to be charged.

It is assumed that the charging system may provide a charging service for a plurality of objects to be charged, and the plurality of objects to be charged may be respectively denoted as an object 1 to be charged, an object 2 to be charged, an object 3 to be charged, and the like.

The object 1 to be charged may initiate a charging request 1 to the control module of the charging system through an application or an applet. The charging request may carry an expected charging duration 1. For example, the expected charging duration 1 of the object 1 to be charged is 4 hours. Based on the expected input power, 20 kW, (that is, a first power parameter of the object 1 to be charged) corresponding to the expected charging duration of the object 1 to be charged, the control module may allocate, to the object 1 to be charged, a charging terminal that can provide a 20 kW power. For example, the control module allocates the charging terminal 1 (or the output end 1) to the object 1 to be charged. The charging system may further include a guiding module, and the guiding module may include a display unit or a lighting unit.

The display unit may display a location of the charging terminal allocated to the object to be charged, or display a location of a parking space corresponding to the charging terminal allocated to the object to be charged. For example, the display unit may display a location of the charging terminal 1, or display a location of a parking space corresponding to the charging terminal 1. The display unit may display a map of a charging station or a parking lot to which the charging system belongs and a location of the charging terminal 1 (or a location of a parking space corresponding to the charging terminal 1). Such a design facilitates guiding the object 1 to be charged to reach the location of the charging terminal 1.

The lighting unit may include a plurality of indicator lights. The plurality of indicator lights may be in a one-to-one correspondence with the charging terminals, and an indicator light corresponding to a charging terminal may be disposed near the charging terminal. The control module may control an indicator light corresponding to the charging terminal 1 to be in a lighting state, so as to guide the object 1 to be charged to reach the location of the charging terminal 1. Alternatively, the plurality of indicator lights are in a lighting state, which can form a guiding path, so that the object 1 to be charged reaches the location of the charging terminal 1 along the guiding path.

It should be noted that the guiding module may also guide the object 1 to be charged to the location of the charging terminal 1 in another manner, which is not excessively limited in this embodiment of this application.

After the object 1 to be charged is connected to the charging terminal 1, the charging terminal 1 may obtain an actual charging power (that is, a second power parameter of the object 1 to be charged) of the object 1 to be charged when the object 1 to be charged is charged, and send the actual charging power of the object 1 to be charged to the control module. It is assumed that the actual charging power of the object 1 to be charged that is obtained by the charging terminal 1 is 10 kW. The control module may allocate an output end (or a charging terminal) to the object to be charged, based on the second power parameter of the object 1 to be charged being less than or equal to a preset power parameter threshold (that is, the maximum power, 20 kW, of the electrical energy that can be output by the first energy supply unit) and a remaining power of each direct current-to-direct current conversion module. A remaining power of a direct current-to-direct current conversion module 1 is 60 kW, and the direct current-to-direct current conversion module M1 includes an idle first energy supply unit A1 and a first energy supply unit A2. The control module may control the first energy supply unit A1 in the direct current-to-direct current conversion module M1 to output electrical energy to the first power sharing bus, and a power of the output electrical energy is 10 kW. The controller may control a contactor between the charging terminal 1 and the output end 1 to be in an on state. At this time, the remaining power of the direct current-to-direct current conversion module 1 is 50 kW.

The object 2 to be charged may initiate a charging request 2 to the control module of the charging system through an application or an applet. The charging request may carry an expected charging duration 2. For example, the expected charging duration 2 of the object 2 to be charged is 2 hours. Based on the expected input power, 20 kW, (that is, a first power parameter of the object 2 to be charged) corresponding to the expected charging duration of the object 2 to be charged, the control module may allocate, to the object 2 to be charged, a charging terminal that can provide a 20 kW power. For example, the control module allocates the charging terminal 2 (or the output end 2) to the object 2 to be charged. Similarly, the control module may control the guiding module to display a location of the charging terminal 2, so that the object 2 to be charged reaches the location of the charging terminal 2.

After the object 2 to be charged is connected to the charging terminal 2, the charging terminal 2 may obtain an actual charging power (that is, a second power parameter of the object 2 to be charged) of the object 2 to be charged when the object 2 to be charged is charged, and send the actual charging power of the object 2 to be charged to the control module. It is assumed that the actual charging power of the object 2 to be charged that is obtained by the charging terminal 2 is 20 kW. The control module may allocate an output end (or a charging terminal) to the object to be charged, based on the second power parameter of the object 2 to be charged being less than or equal to a preset power parameter threshold (that is, the maximum power, 20 kW, of the electrical energy that can be output by the first energy supply unit) and a remaining power of each direct current-to-direct current conversion module. The remaining power of the direct current-to-direct current conversion module 1 is 50 kW, and the direct current-to-direct current conversion module M1 includes an idle first energy supply unit A2. The control module may control the first energy supply unit A2 in the direct current-to-direct current conversion module M1 to output electrical energy to the first power sharing bus, and a power of the output electrical energy is 20 kW. The controller may control a contactor between the charging terminal 2 and the output end 2 to be in an on state. At this time, the remaining power of the direct current-to-direct current conversion module 1 is 30 kW.

The object 3 to be charged may initiate a charging request 3 to the control module of the charging system through an application or an applet. The charging request may carry an expected charging duration 3. For example, the expected charging duration 3 of the object 3 to be charged is 0.5 hours. Based on the expected input power, 60 kW, (that is, a first power parameter of the object 3 to be charged) corresponding to the expected charging duration of the object 3 to be charged, the control module may allocate, to the object 3 to be charged, a charging terminal that can provide a 60 kW power. For example, the control module allocates the charging terminal 6 (or the output end 6) to the object 2 to be charged. Similarly, the control module may control the guiding module to display a location of the charging terminal 6, so that the object 3 to be charged reaches the location of the charging terminal 6.

After the object 3 to be charged is connected to the charging terminal 6, the charging terminal 6 may obtain an actual charging power (that is, a second power parameter of the object 2 to be charged) of the object 3 to be charged when the object 3 to be charged is charged, and send the actual charging power of the object 3 to be charged to the control module. It is assumed that the actual charging power of the object 3 to be charged that is obtained by the charging terminal 6 is 60 kW. Because the remaining power of the direct current-to-direct current conversion module 1 is 30 kW, which is less than the expected input power of the object 3 to be charged, the remaining power of the direct current-to-direct current conversion module 1 does not meet a charging requirement of the object 3 to be charged. In a possible power supply manner, the control module may control a second energy supply unit B1 of a direct current-to-direct current conversion module 2 to output electrical energy to the second power sharing bus, and an output power is 60 kW. In addition, a contactor between the output end 6 and the charging terminal 6 is controlled to be in an on state. The charging terminal 6 may obtain 60 kW electrical energy from the second power sharing bus, and provide the electrical energy for the object 3 to be charged.

In another possible power supply manner, the control module may control a second energy supply unit B1 in the direct current-to-direct current conversion module 1 to output 30 kW to the second power sharing bus, and control the second energy supply unit B 1 in the direct current conversion module 2 to output 30 kW to the second power sharing bus. In addition, the contactor between the output end 6 and the charging terminal 6 is controlled to be in an on state. The charging terminal 6 may obtain 60 kW electrical energy from the second power sharing bus, and provide the electrical energy for the object 3 to be charged.

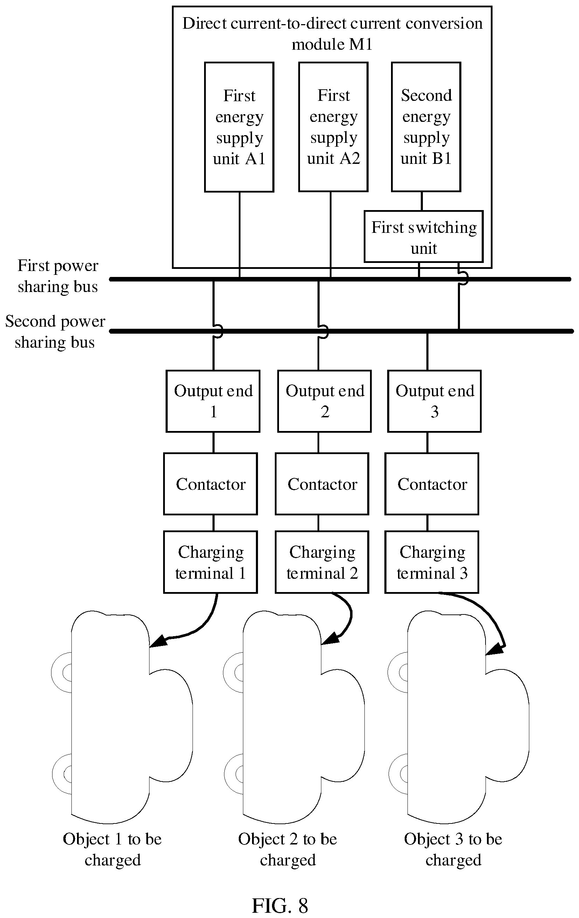

In another application scenario, as shown in FIG. 8, the charging system may include one direct current-to-direct current conversion module. A rated power of an alternating current-to-direct current conversion module in the charging system may be 40 kW or 60 kW. In this embodiment of this application, 60 kW is used as an example. A rated power of the direct current-to-direct current conversion module may be 60 kW. The direct current-to-direct current conversion module includes two first energy supply units and one second energy supply unit. In the direct current-to-direct current conversion module, an output power range of each first energy supply unit is 0-20 kW. An output power range of each second energy supply unit is 0-60 kW. As shown in FIG. 8, in the charging system, a first power sharing bus is coupled to two first output ends, and a second power sharing bus is coupled to one second output ends. The first output ends and the second output ends of the charging system each are coupled to a charging terminal. In this embodiment of this application, the first output end is coupled to the first power sharing bus, and the second output end is coupled to the second power sharing bus. For ease of description, the first output end and the second output end are numbered together, denoted as an output end i (i is 1 to 12). The output ends 1 and 2 are respectively the first output ends, and are coupled to the first power sharing bus. The output end 3 is the second output end, and is coupled to the second power sharing bus. The charging terminal coupled to the charging system is denoted as a charging terminal i (i is 1 to 3). Charging terminals 1 and 2 are respectively coupled to the output ends 1 and 2. A charging terminal 3 is coupled to the output end 3.

The second energy supply unit may be configured to share a remaining power of the direct current-to-direct current conversion module. The remaining power of the direct current-to-direct current conversion module may be shared to the charging terminals 1 and 2 through the first power sharing bus. The remaining power of the direct current-to-direct current conversion module may be shared to the charging terminal 3 through the second power sharing bus.

It is assumed that the charging system may provide a charging service for a plurality of objects to be charged, and the plurality of objects to be charged may be respectively denoted as an object 1 to be charged, an object 2 to be charged, an object 3 to be charged, and the like.

The control module of the charging system may store a correspondence between an expected charging duration and an expected input power. The expected charging duration may be 0.5 hours, 2 hours, 4 hours, or 8 hours. An expected input power for 8 hours is 5 kW. An expected input power for 4 hours is 10 kW. An expected input power for 2 hours is 20 kW. An expected input power in 0.5 hour is 60 kW.

The object 1 to be charged may initiate a charging request 1 to the control module of the charging system through an application or an applet. The charging request may carry an expected charging duration 1. For example, the expected charging duration 1 of the object 1 to be charged is 4 hours. Based on the expected power parameter, 10 kW, (that is, a first power parameter of the object 1 to be charged) corresponding to the expected charging duration of the object 1 to be charged, the control module may allocate, to the object 1 to be charged, a charging terminal that can provide a 10 kW power. For example, the control module allocates the charging terminal 1 (or the output end 1) to the object 1 to be charged. The control module may control the guiding module to display a location of the charging terminal 1, so that the object 1 to be charged reaches the location of the charging terminal 1.

After the object 1 to be charged is connected to the charging terminal 1, the charging terminal 1 may obtain an actual charging power (that is, a second power parameter of the object 1 to be charged) of the object 1 to be charged when the object 1 to be charged is charged, and send the actual charging power of the object 1 to be charged to the control module. It is assumed that the actual charging power of the object 1 to be charged that is obtained by the charging terminal 1 is 10 kW. The control module may allocate an output end (or a charging terminal) to the object to be charged, based on the second power parameter of the object 1 to be charged being less than or equal to a preset power parameter threshold (that is, the maximum power, 20 kW, of the electrical energy that can be output by the first energy supply unit) and a remaining power of each direct current-to-direct current conversion module. A remaining power of a direct current-to-direct current conversion module 1 is 60 kW, and the direct current-to-direct current conversion module M1 includes an idle first energy supply unit A1 and a first energy supply unit A2. The control module may control the first energy supply unit A1 in the direct current-to-direct current conversion module M1 to output electrical energy to the first power sharing bus, and a power of the output electrical energy is 10 kW. The controller may control a contactor between the charging terminal 1 and the output end 1 to be in an on state. At this time, the remaining power of the direct current-to-direct current conversion module 1 is 50 kW.

The object 2 to be charged may initiate a charging request 2 to the control module of the charging system through an application or an applet. The charging request may carry an expected charging duration 2. For example, the expected charging duration 2 of the object 2 to be charged is 2 hours. Based on the expected power parameter, 20 kW, (that is, a first power parameter of the object 2 to be charged) corresponding to the expected charging duration of the object 2 to be charged, the control module may allocate, to the object 2 to be charged, a charging terminal that can provide a 20 kW power. For example, the control module allocates the charging terminal 2 (or the output end 2) to the object 2 to be charged. Similarly, the control module may control the guiding module to display a location of the charging terminal 2, so that the object 2 to be charged reaches the location of the charging terminal 2.

After the object 2 to be charged is connected to the charging terminal 2, the charging terminal 2 may obtain an actual charging power (that is, a second power parameter of the object 2 to be charged) of the object 2 to be charged when the object 2 to be charged is charged, and send the actual charging power of the object 2 to be charged to the control module. It is assumed that the actual charging power of the object 2 to be charged that is obtained by the charging terminal 2 is 20 kW. The control module may allocate an output end (or a charging terminal) to the object to be charged, based on the second power parameter of the object 2 to be charged being less than or equal to a preset power parameter threshold (that is, the maximum power, 20 kW, of the electrical energy that can be output by the first energy supply unit) and a remaining power of each direct current-to-direct current conversion module. The remaining power of the direct current-to-direct current conversion module 1 is 50 kW, and the direct current-to-direct current conversion module M1 includes an idle first energy supply unit A2. The control module may control the first energy supply unit A2 in the direct current-to-direct current conversion module M1 to output electrical energy to the first power sharing bus, and a power of the output electrical energy is 20 kW. The controller may control a contactor between the charging terminal 2 and the output end 2 to be in an on state. At this time, the remaining power of the direct current-to-direct current conversion module 1 is 30 kW.

The object 3 to be charged may initiate a charging request 3 to the control module of the charging system through an application or an applet. The charging request may carry an expected charging duration 3. For example, the expected charging duration 3 of the object 3 to be charged is 0.5 hours. Based on the expected power parameter, 60 kW, (that is, a first power parameter of the object 3 to be charged) corresponding to the expected charging duration of the object 3 to be charged, the control module may allocate, to the object 3 to be charged, a charging terminal that can provide a 60 kW power. For example, the control module allocates the charging terminal 3 (or the output end 3) to the object 2 to be charged. Similarly, the control module may control the guiding module to display a location of the charging terminal 3, so that the object 3 to be charged reaches the location of the charging terminal 3.

After the object 3 to be charged is connected to the charging terminal 3, the charging terminal 3 may obtain an actual charging power (that is, a second power parameter of the object 2 to be charged) of the object 3 to be charged when the object 3 to be charged is charged, and send the actual charging power of the object 3 to be charged to the control module. It is assumed that the actual charging power of the object 3 to be charged that is obtained by the charging terminal 3 is 60 kW. Because the remaining power of the direct current-to-direct current conversion module 1 is 30 kW, the control module may control the second energy supply unit B 1 of the direct current-to-direct current conversion module 1 to output 30 kW electrical energy to the second power sharing bus.

It is assumed that when the object 3 to be charged initiates the charging request, the charging system does not charge another object to be charged. The object 3 to be charged may initiate a charging request 3 to the control module of the charging system through an application or an applet. The charging request may carry an expected charging duration 3. For example, the expected charging duration 3 of the object 3 to be charged is 0.5 hours. Based on the expected power parameter, 60 kW, (that is, a first power parameter of the object 3 to be charged) corresponding to the expected charging duration of the object 3 to be charged, the control module may allocate, to the object 3 to be charged, a charging terminal that can provide a 60 kW power. For example, the control module allocates the charging terminal 3 (or the output end 3) to the object 2 to be charged. Similarly, the control module may control the guiding module to display a location of the charging terminal 3, so that the object 3 to be charged reaches the location of the charging terminal 3. After the object 3 to be charged is connected to the charging terminal 3, the charging terminal 3 may obtain an actual charging power (that is, a second power parameter of the object 2 to be charged) of the object 3 to be charged when the object 3 to be charged is charged, and send the actual charging power of the object 3 to be charged to the control module. It is assumed that the actual charging power of the object 3 to be charged that is obtained by the charging terminal 3 is 60 kW. Because the remaining power of the direct current-to-direct current conversion module 1 is 60 kW, the control module may control the second energy supply unit B1 of the direct current-to-direct current conversion module 1 to output 60 kW electrical energy to the second power sharing bus.

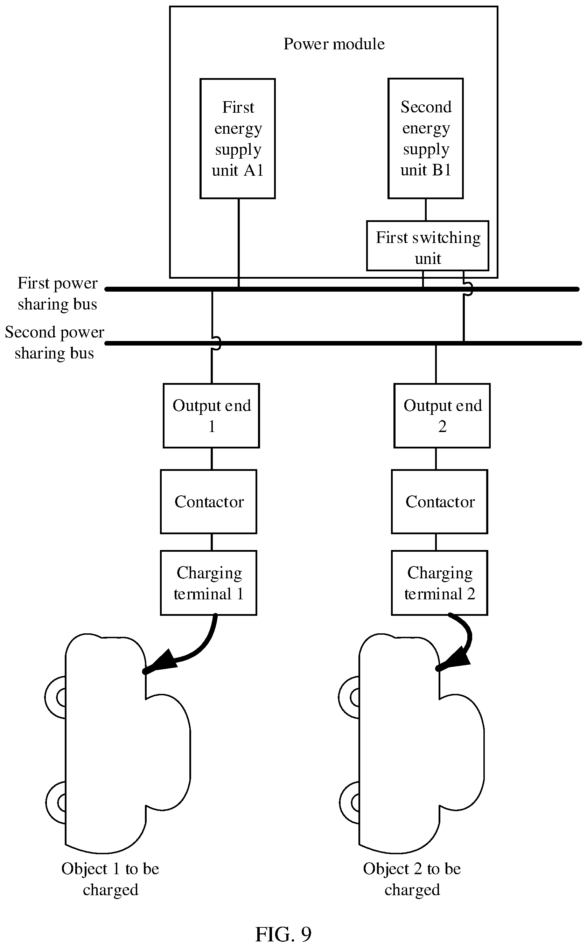

In another application scenario, as shown in FIG. 9, the charging system may include one direct current-to-direct current conversion module. The direct current-to-direct current conversion module may be integrated with an alternating current-to-direct current conversion module. The integrated module is denoted as a power module, and the power module may include one first energy supply unit A 1 and one first and second energy supply unit B 1.

A rated power of the power module in the charging system may be 40 kW or 60 kW. In this embodiment of this application, 40 kW is used as an example. The power module includes one first energy supply unit A1, one second energy supply unit B1, and a first switching unit coupled to the second energy supply unit B1. An output power range of the first energy supply unit is 0-20 kW. An output power range of the second energy supply unit is 0-40 kW.

As shown in FIG. 9, in the charging system, a first power sharing bus is coupled to one first output end, and a second power sharing bus is coupled to one second output end. The first output end and the second output end of the charging system each are coupled to a charging terminal. In this embodiment of this application, the first output end is coupled to the first power sharing bus, and the second output end is coupled to the second power sharing bus. For ease of description, the first output end and the second output end are numbered together, denoted as an output end i (i is 1, 2). The output end 1 is the first output end, and is coupled to the first power sharing bus. The output end 2 is the second output end, and is coupled to the second power sharing bus.

The charging terminals coupled to the charging system are denoted as charging terminals 1 and 2. The charging terminals 1 and 2 are respectively coupled to the output ends 1 and 2. The second energy supply unit may be configured to share a remaining power of the power module. The remaining power of the power module may be shared to the charging terminal 1 through the first power sharing bus. The remaining power of the power module may be shared to the charging terminal 2 through the second power sharing bus.

The control module of the charging system may store a correspondence between an expected charging duration and an expected input power. The expected charging duration may be 0.5 hours, 2 hours, 4 hours, or 8 hours. An expected input power for 8 hours is 5 kW. An expected input power for 4 hours is 10 kW. An expected input power for 2 hours is 20 kW. An expected input power in 0.5 hour is 60 kW.

It is assumed that the charging system may provide a charging service for a plurality of objects to be charged, and the plurality of objects to be charged may be respectively denoted as an object 1 to be charged, an object 2 to be charged, and the like.

The object 1 to be charged may initiate a charging request 1 to the control module of the charging system through an application or an applet. The charging request may carry an expected charging duration 1. For example, the expected charging duration 1 of the object 1 to be charged is 4 hours. Based on the expected power parameter, 10 kW, (that is, a first power parameter of the object 1 to be charged) corresponding to the expected charging duration of the object 1 to be charged, the control module may allocate, to the object 1 to be charged, a charging terminal that can provide a 10 kW power. For example, the control module allocates the charging terminal 1 (or the output end 1) to the object 1 to be charged. The control module may control the guiding module to display a location of the charging terminal 1, so that the object 1 to be charged reaches the location of the charging terminal 1.

After the object 1 to be charged is connected to the charging terminal 1, the charging terminal 1 may obtain an actual charging power (that is, a second power parameter of the object 1 to be charged) of the object 1 to be charged when the object 1 to be charged is charged, and send the actual charging power of the object 1 to be charged to the control module. It is assumed that the actual charging power of the object 1 to be charged that is obtained by the charging terminal 1 is 10 kW. The control module may allocate an output end (or a charging terminal) to the object to be charged, based on the second power parameter of the object 1 to be charged being less than or equal to a preset power parameter threshold (that is, the maximum power, 20 kW, of the electrical energy that can be output by the first energy supply unit) and a remaining power of the power module. The remaining power of the direct current-to-direct current conversion module 1 is 60 kW, and the power module includes an idle first energy supply unit A 1. The control module may control the first energy supply unit A1 in the power module to output electrical energy to the first power sharing bus, and a power of the output electrical energy is 10 kW. The controller may control a contactor between the charging terminal 1 and the output end 1 to be in an on state. At this time, the remaining power of the power module is 50 kW.

The object 2 to be charged may initiate a charging request 2 to the control module of the charging system through an application or an applet. The charging request may carry an expected charging duration 2. For example, the expected charging duration 2 of the object 2 to be charged is 2 hours. Based on the expected power parameter, 20 kW, (that is, a first power parameter of the object 2 to be charged) corresponding to the expected charging duration of the object 2 to be charged, the control module may allocate, to the object 2 to be charged, a charging terminal that can provide a 20 kW power. For example, the control module allocates the charging terminal 2 (or the output end 2) to the object 2 to be charged. Similarly, the control module may control the guiding module to display a location of the charging terminal 2, so that the object 2 to be charged reaches the location of the charging terminal 2.

After the object 2 to be charged is connected to the charging terminal 2, the charging terminal 2 may obtain an actual charging power (that is, a second power parameter of the object 2 to be charged) of the object 2 to be charged when the object 2 to be charged is charged, and send the actual charging power of the object 2 to be charged to the control module. It is assumed that the actual charging power of the object 2 to be charged that is obtained by the charging terminal 2 is 20 kW. The control module may allocate an output end (or a charging terminal) to the object to be charged, based on the second power parameter of the object 2 to be charged being less than or equal to a preset power parameter threshold (that is, the maximum power, 20 kW, of the electrical energy that can be output by the first energy supply unit) and a remaining power of the power module. The remaining power of the power module is 50 kW, and the power module includes an idle second energy supply unit B1. The control module may control the second energy supply unit B1 to output electrical energy to the first power sharing bus, and a power of the output electrical energy is 20 kW. The controller may control a contactor between the charging terminal 2 and the output end 2 to be in an on state. At this time, the remaining power of the direct current-to-direct current conversion module 1 is 30 kW.

It is assumed that when the object 3 to be charged initiates the charging request, the charging system does not charge another object to be charged. The object 3 to be charged may initiate a charging request 3 to the control module of the charging system through an application or an applet. The charging request may carry an expected charging duration 3. For example, the expected charging duration 3 of the object 3 to be charged is 0.5 hours. Based on the expected power parameter, 40 kW, (that is, a first power parameter of the object 3 to be charged) corresponding to the expected charging duration of the object 3 to be charged, the control module may allocate, to the object 3 to be charged, a charging terminal that can provide a 40 kW power. For example, the control module allocates the charging terminal 2 (or the output end 2) to the object 3 to be charged. Similarly, the control module may control the guiding module to display a location of the charging terminal 2, so that the object 3 to be charged reaches the location of the charging terminal 2. After the object 3 to be charged is connected to the charging terminal 2, the charging terminal 2 may obtain an actual charging power (that is, a second power parameter of the object 3 to be charged) of the object 3 to be charged when the object 3 to be charged is charged, and send the actual charging power of the object 3 to be charged to the control module. It is assumed that the actual charging power of the object 3 to be charged that is obtained by the charging terminal 2 is 40 kW. Because the remaining power of the power module is 40 kW, the control module may control the second energy supply unit B 1 to output 40 kW electrical energy to the second power sharing bus.

Based on the charging system provided in any one of the foregoing embodiments, this application further provides a charging station (or referred to a charging platform, a charging pile system, or the like), which may include one or more charging systems provided in any one of the foregoing embodiments. In an example, the charging station may include one charging system. The charging system may be the charging system provided in any one of the foregoing embodiments. For a working process of the charging system, refer to the foregoing embodiments. Details are not described herein again.

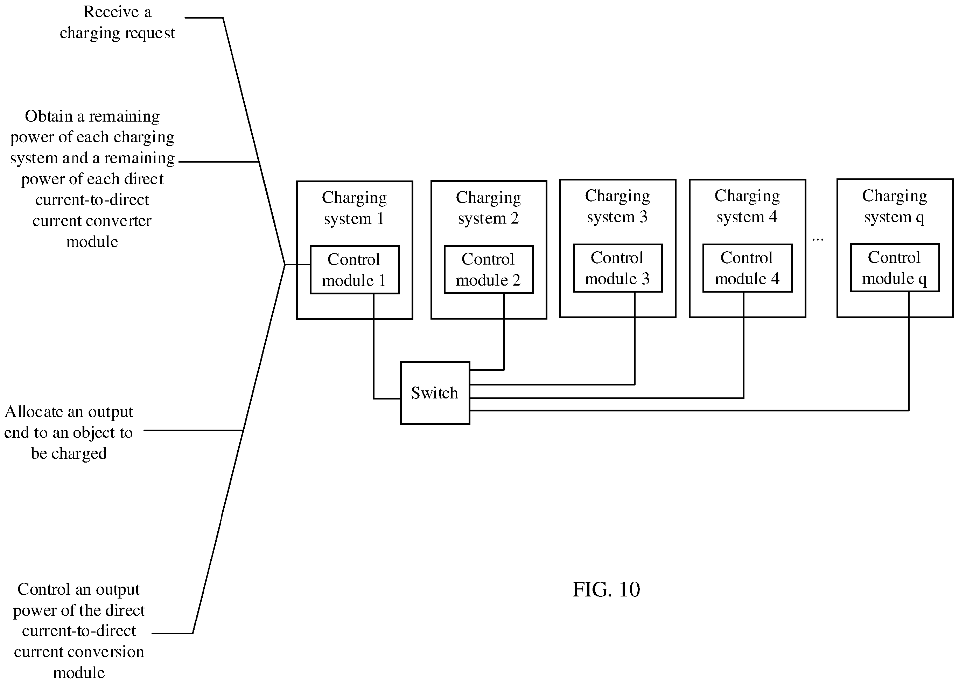

In another example, the charging station may include a plurality of charging systems. For a structure of each charging system, refer to the charging system provided in any one of the foregoing embodiments. Details are not described herein again. Referring to FIG. 10, control modules of the charging systems in the charging station are communicatively connected, and may exchange data, messages, or instructions. In an example, as shown in FIG. 10, the charging station may include a charging system 1, a charging system 2, a charging system 3, a charging system 4, ..., and a charging system q. q may be a positive integer. In other words, the charging station may include one or more charging systems.

The control modules in the charging systems may be communicatively connected via a switch. In some scenarios, the charging systems may be at different locations. For example, the charging systems are distributed in different communities or campuses. A control module of one of the plurality of charging systems may be used as a primary control module. A control module 1 may communicate with control modules in the other charging systems via the switch.

The control module 1 in the charging system 1 may determine remaining power information (a remaining available capacity) of the control module 1, and obtain remaining power information of the other charging systems, and/or a remaining power of each direct current-to-direct current conversion module in each charging system.

As a primary control module, the control module 1 may exchange information with the other control modules. The control module 1 may also obtain a remaining power of each direct current-to-direct current conversion module, an output power status of each first energy supply unit, and an output power status of each second energy supply unit. The control module 1 may exchange data, messages, instructions, and the like with the control modules of the other charging systems, to instruct the control modules of the other charging systems to control a direct current-to-direct current conversion module of a charging system to which each of the control modules belongs, so as to control an output power of the other charging systems.

The control module 1 in the charging system 1 may also receive a charging request of each object to be charged, or a charging request sent by an electronic device. The control module 1 may obtain a first charging parameter carried in the charging request, where the first charging parameter may represent an expected charging duration of an object to be charged. The control module 1 may determine, based on a preset correspondence between an expected charging duration and an expected power parameter, an expected power parameter corresponding to the first charging parameter, that is, determine the first power parameter, so that the control module 1 obtains the first power parameter.

The control module 1 may allocate an output end to the object to be charged based on a remaining power of each charging system. For example, the control module 1 allocates a charging system whose remaining power is greater than or equal to the first power parameter to the object to be charged. For example, if a remaining power of a charging system m is greater than or equal to the first power parameter, the control module 1 allocates the charging system m to the system to be charged.

The control module 1 may notify a control module m, so that the control module m allocates an output end to the object to be charged. The control module m may allocate an output end to the object to be charged by using some or all operations in which the charging system in the foregoing embodiments allocates an output end to an object to be charged, and control a direct current-to-direct current conversion module in the charging system m, so as to charge the object to be charged.

All or some of the foregoing embodiments may be implemented by software, hardware, firmware, or any combination thereof. When software is used to implement the foregoing embodiments, all or some of embodiments may be implemented in the form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), a semiconductor medium (for example, a solid-state drive (solid-state disk, SSD)), or the like.

An embodiment of this application further provides a readable storage medium, configured to store the methods or algorithms provided in the foregoing embodiments. For example, the readable storage medium may be a random access memory (random access memory, RAM), a flash memory, a read-only memory (read only memory, ROM), an EPROM memory, a non-volatile read-only memory (Electronic Programmable ROM, EPROM), a register, a hard disk, a removable disk, or a storage medium of any other form in the art.

The steps of the methods or algorithms described in the embodiments of this application may be directly embedded into a control module. The control module may include a RAM memory, a flash memory, a ROM memory, an EPROM memory, a register, a hard disk, a removable disk, or a storage medium in any other form in the art, and is configured to store the steps of the methods or algorithms provided in the embodiments of this application. For example, the storage medium may be connected to the control module or a processor (or a controller), so that the control module and the processor (or the controller) may read information from the storage medium and write information into the storage medium. Optionally, the storage medium may further be integrated into the control module or the processor (or the controller).

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and the embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application.

It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A charging system, comprising one or more direct current-to-direct current conversion modules, a first power sharing bus, a second power sharing bus, at least one first output end, and at least one second output end, wherein
the direct current-to-direct current conversion module comprises at least one first energy supply unit and at least one second energy supply unit;
the first energy supply unit is coupled to the first power sharing bus, and is configured to output direct current electrical energy to the first power sharing bus;
the second energy supply unit is coupled to the first power sharing bus and the second power sharing bus, and is configured to output direct current electrical energy to the first power sharing bus or the second power sharing bus;
the first output end is coupled to the first power sharing bus, and is configured to transmit direct current electrical energy on the first power sharing bus to a coupled charging apparatus; and
the second output end is coupled to the second power sharing bus, and is configured to transmit direct current electrical energy on the second power sharing bus to a coupled charging apparatus, wherein
a maximum output power of the first output end is different from a maximum output power of the second output end.

2. The charging system according to claim 1, wherein a maximum output power of the second energy supply unit is the same as a maximum output power of the direct current-to-direct current conversion module.

3. The charging system according to claim 1 or 2, wherein the maximum output power of the second energy supply unit is greater than a maximum output power of the first energy supply unit.

4. The charging system according to any one of claims 1 to 3, wherein the maximum output power of the first output end is less than the maximum output power of the second output end.

5. The charging system according to any one of claims 1 to 4, wherein a quantity of the at least one first output end is the same as a quantity of all first energy supply units in the one or more direct current-to-direct current conversion modules; and
a quantity of the at least one second output end is the same as a quantity of all second energy supply units in the one or more direct current-to-direct current conversion modules.

6. The charging system according to any one of claims 1 to 5, wherein all of the first output ends have the same maximum output power, and/or all of the second output ends have the same maximum output power.

7. The charging system according to any one of claims 1 to 6, wherein the direct current-to-direct current conversion module further comprises at least one first switching unit, the at least one first switching unit is in a one-to-one correspondence with the at least one second energy supply unit comprised in the direct current-to-direct current conversion module, and the second energy supply unit is coupled to a corresponding first switching unit; and
the first switching unit is coupled to the first power sharing bus and the second power sharing bus, wherein the first switching unit is configured to transmit, to the first power sharing bus or the second power sharing bus, direct current electrical energy output by the second energy supply unit corresponding to the first switching unit.

8. The charging system according to any one of claims 1 to 7, further comprising an alternating current-to-direct current conversion module, configured to convert alternating current electrical energy provided by an alternating current power source into direct current electrical energy, and then provide the direct current electrical energy for the direct current-to-direct current conversion module, wherein
a voltage output by the alternating current-to-direct current conversion module to the direct current-to-direct current conversion module is less than or equal to 1,000 volts.

9. The charging system according to any one of claims 1 to 8, wherein a maximum value of an output voltage of the first energy supply unit is less than or equal to 1,000 volts; and/or a maximum value of an output voltage of the second energy supply unit is less than or equal to 1,000 volts.

10. The charging system according to claim 9, wherein a minimum value of the output voltage of the first energy supply unit is greater than or equal to 150 volts; and/or a minimum value of the output voltage of the second energy supply unit is greater than or equal to 150 volts.

11. The charging system according to any one of claims 1 to 10, wherein a maximum power of the direct current electrical energy providable by the first output end to the coupled charging apparatus is 20 kilowatts.

12. The charging system according to any one of claims 1 to 11, further comprising a control module, wherein the direct current-to-direct current conversion module further comprises a control unit, and the control unit in the direct current-to-direct current conversion module is coupled to the first energy supply unit and the second energy supply unit; and
the control module is communicatively connected to the control unit, and is configured to control the control unit to adjust the direct current electrical energy output by the direct current-to-direct current conversion module to the first power sharing bus, and/or adjust the direct current electrical energy output by the direct current-to-direct current conversion module to the second power sharing bus.

13. A charging station, comprising at least one charging system according to any one of claims 1 to 12 and a plurality of charging apparatuses, wherein
the charging apparatus is coupled to a first output end or a second output end of one charging system; and
the charging apparatus is coupled to an object to be charged, and is configured to transmit, to the object to be charged, direct current electrical energy provided by the charging system coupled to the charging apparatus.

14. A power supply method, applied to the charging system according to any one of claims 1 to 12, the method comprising:
obtaining a first power parameter, wherein the first power parameter is an expected input power when an object to be charged is charged; and
allocating a target output end from at least one first output end and at least one second output end of the charging system to the object to be charged, wherein a maximum output power of the target output end is greater than or equal to the first power parameter.

15. The method according to claim 14, wherein
if the first power parameter is less than or equal to a specified power parameter threshold, and there is an idle first output end in the at least one first output end, the idle first output end is allocated to the object to be charged, wherein the power parameter threshold represents a maximum output power of a first energy supply unit of any direct current-to-direct current conversion module in the charging system; or
if the first power parameter is greater than the power parameter threshold, and there is an idle second output end in the at least one second output end, the idle second output end is allocated to the object to be charged; or
if the first power parameter is less than or equal to the power parameter threshold, there is no idle first output end in the at least one first output end, and there is an idle second output end in the at least one second output end, the idle second output end is allocated to the object to be charged.

16. The method according to claim 15, wherein after the allocating a target output end to the object to be charged, the method further comprises:
obtaining a second power parameter of the object to be charged, wherein the second power parameter is the same as an actual charging power of the object to be charged; and
controlling the direct current-to-direct current conversion module in the charging system based on the second power parameter.

17. The method according to claim 16, wherein the target output end allocated to the object to be charged is the idle first output end;
the controlling the direct current-to-direct current conversion module in the charging system based on the second power parameter comprises:
controlling a first direct current-to-direct current conversion module in the charging system to output first direct current electrical energy to a first power sharing bus, wherein a power of the first direct current electrical energy is the same as the second power parameter, and a remaining power of the first direct current-to-direct current conversion module is greater than or equal to the second power parameter; or
controlling a plurality of second direct current-to-direct current conversion modules in the charging system to separately output direct current electrical energy to the first power sharing bus, wherein a total power of the direct current electrical energy output by the plurality of second direct current-to-direct current conversion modules is the same as the second power parameter, and the plurality of second direct current-to-direct current conversion modules comprise a target second direct current-to-direct current conversion module whose remaining power is less than the second power parameter.

18. The method according to claim 17, wherein the controlling a first direct current-to-direct current conversion module in the charging system to output first direct current electrical energy to a first power sharing bus comprises:
controlling an idle first energy supply unit in the first direct current-to-direct current conversion module to output the first direct current electrical energy to the first power sharing bus; and
the controlling a plurality of second direct current-to-direct current conversion modules in the charging system to separately output direct current electrical energy to the first power sharing bus comprises:
controlling an idle first energy supply unit or an idle second energy supply unit in the target second direct current-to-direct current conversion module to output second direct current electrical energy to the first power sharing bus, wherein a power of the second direct current electrical energy is the same as a remaining power of the target direct current-to-direct current conversion module; and
controlling a second direct current-to-direct current conversion module other than the target second direct current-to-direct current conversion module in the plurality of second direct current-to-direct current conversion modules to output third direct current electrical energy, wherein a sum of powers of the third direct current electrical energy and the second direct current electrical energy is the same as the second power parameter.

19. The method according to claim 16, wherein the target output end allocated to the object to be charged is the idle second output end;
the controlling the direct current-to-direct current conversion module in the charging system based on the second power parameter comprises:
controlling a third direct current-to-direct current conversion module to output fourth direct current electrical energy to a second power sharing bus of the charging system, wherein a power of the fourth direct current electrical energy is the same as the second power parameter, a remaining power of the third direct current-to-direct current conversion module is greater than or equal to the second power parameter, and the third direct current-to-direct current conversion module comprises an idle second energy supply unit; and
controlling a plurality of fourth direct current-to-direct current conversion modules to separately output direct current electrical energy to the second power sharing bus, wherein a total power of direct current electrical energy output by the plurality of fourth direct current-to-direct current conversion modules is the same as the second power parameter, there is a target fourth direct current-to-direct current conversion module whose remaining power is less than the second power parameter in the plurality of fourth direct current-to-direct current conversion modules, and each fourth direct current-to-direct current conversion module comprises an idle second energy supply unit.

20. A computer-readable storage medium, wherein the computer-readable storage medium stores computer instructions that, when executed, cause the method according to any one of claims 14 to 19 to be performed.
